# EUROPEAN PATENT SPECIFICATION

(11) **EP 4 428 724 B1**
(45) Date of publication and mention of the grant of the patent: **17.06.2026**
(21) Application number: 22897397.0
(22) Date of filing: 08.10.2022
(51) Int. Cl.: G06F 21/32, G06F 21/62, H04L 9/40

(54) **INFORMATION PROCESSING SYSTEM AND METHOD, DEVICE AND STORAGE MEDIUM**
INFORMATIONSVERARBEITUNGSSYSTEM UND -VERFAHREN, VORRICHTUNG UND SPEICHERMEDIUM
SYSTÈME ET PROCÉDÉ DE TRAITEMENT D'INFORMATIONS, DISPOSITIF ET SUPPORT DE STOCKAGE

(30) Priority: 25.11.2021 CN 202111415970; 24.01.2022 CN 202210080192
(43) Date of publication of application: 11.09.2024
(73) Proprietor: Huawei Technologies Co., Ltd., Shenzhen, Guangdong 518129 (CN)
(72) Inventor: DING, Jie, Shenzhen, Guangdong 518129 (CN); ZHANG, Rui, Shenzhen, Guangdong 518129 (CN); WU, Caijun, Shenzhen, Guangdong 518129 (CN)
(74) Representative: Körber, Martin Hans
(86) International application number: PCT/CN2022/123841
(87) International publication number: WO 2023/093312

(56) References cited:
- CN-A- 107 612 910
- CN-A- 107 995 147
- CN-A- 109 886 026
- CN-A- 110 290 149
- CN-A- 110 493 220
- CN-A- 111 738 238
- US-A1- 2016 204 936
- US-A1- 2021 194 863
- US-B2- 10 171 459

## Description

### TECHNICAL FIELD

This application relates to the field of computer technologies, and in particular, to an information processing system, method, and device, and a storage medium.

### BACKGROUND

With the advent of the big data era, unique and private user information, for example, face information, is commonly used for user identity recognition. To protect user information from being disclosed, currently, when face verification is performed based on a one-to-one information processing process, face information is usually encrypted on a client. In this way, a server needs to rely on a key generated by the client to compare encrypted face information with known face information.

However, in the foregoing technical solution, when a more complex information processing requirement is faced, for example, when face recognition needs to be implemented based on a one-to-many information processing process, security of user information cannot be ensured. Therefore, there is an urgent need for an information processing method, so that user information security of can be effectively ensured in a process of performing information processing based on user information.

US 2016/204936 A1 discloses an information processing method, a computer-readable recording medium, and an information processing apparatus.

US 10 171 459 B2 discloses a method of processing a ciphertext, an apparatus, and a storage medium.

CN 111 738 238 A discloses a face recognition method and device, which can improve the security and response speed of face recognition.

### SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

This application provides an information processing system, method, and device, and a storage medium, so that information security can be effectively ensured. The technical solution is as follows:

According to a first aspect, an information processing system is provided. The information processing system includes: a client, a first node, and a second node.

The client is configured to: send, to the first node, a recognition request that carries number information of the client, and send an encryption feature of a to-be-recognized first object and the number information of the client to the second node, where the encryption feature of the first object is obtained based on a public key of the first node and a feature of the first object.

The first node is configured to: determine a first target file in the second node in response to the recognition request, and send a recognition indication to the second node, where the recognition indication carries the number information of the client and file information of the first target file.

The second node is configured to: in response to the recognition indication, compare the encryption feature of the first object based on the received encryption feature of the first object, the number information of the client, the file information of the first target file, and an evaluation key of the first node, to obtain a comparison result, and send the comparison result to the first node.

The first node is further configured to: when receiving the comparison result, decrypt the comparison result based on a private key of the first node, obtain object information of the first object based on a decrypted comparison result, and send the object information of the first object to the client.

The object information includes information used to identify an object in the information processing system. For example, in a facial recognition scenario, the object information refers to a user name input when a user registers with a facial recognition system. In some other embodiments, the object information includes identity information of an object. For example, in a facial recognition scenario, the object information includes a name, an age, an identity card number, and the like that are input when a user registers with a facial recognition system.

According to the foregoing technical solution, the first node stores the private key and public object information, and the second node stores information obtained by encryption based on the public key of the first node. This ensures separation of storage permission and decryption permission. When feature information of an object is not sent out from the client, a plurality of nodes interact with each other based on an information mapping relationship. This may implement efficient information processing and effectively ensure information security. In addition, according to the foregoing technical solution, one-to-many information recognition may be implemented based on a set of keys. This effectively resolves a problem that a large quantity of storage spaces are occupied to store a plurality of sets of keys corresponding to a plurality of registered features.

In a possible implementation, the client is further configured to: perform encoding based on the feature of the first object, to obtain a first feature vector of the first object, where the first feature vector is an M-dimensional vector;
obtain a second feature vector of the first object based on the first feature vector of the first object, where the second feature vector of the first object is N×M-dimensional vectors, and the second feature vector of the first object includes N first feature vectors of the first object; and
encrypt the second feature vector of the first object based on the public key of the first node, to obtain the encryption feature of the first object, where
M and N are positive integers.

In the foregoing technical solution, in a process of performing information recognition, a feature of a to-be-recognized object is encoded as a multi-dimensional vector that matches a dimension of the first target file, so that the feature of the to-be-recognized object can be compared with a plurality of registered objects in parallel. This is equivalent to completing an information processing process for the plurality of registered objects in one processing periodicity, so that information processing efficiency is greatly improved.

In a possible implementation, the second node includes a scheduling node and a plurality of target nodes.

The first node is configured to: determine, in a file information table based on the number information of the client in the recognition request, a first target node that corresponds to the client and that is in the second node, and determine, in the file information table, the file information of the first target file in the first target node, where the file information table includes a correspondence between the number information of the client and the plurality of target nodes included in the second node, and a correspondence between the plurality of target nodes and files.

In a possible implementation, the scheduling node in the second node is configured to: in response to the recognition indication, indicate the first target node to load the evaluation key of the first node into memory.

In the foregoing technical solution, when receiving the recognition indication, the first target node directly loads the evaluation key, so that when receiving the encryption feature sent by the client, the first target node may directly perform recognition based on the evaluation key in the memory. This reduces time for loading the evaluation key in a recognition process.

According to the foregoing technical solution, a physical data parallel processing capability of a multi-node architecture of the information processing system is fully utilized, and information processing efficiency is greatly improved.

In a possible implementation, the scheduling node in the second node is configured to: in response to the recognition indication, send the recognition indication and the encryption feature of the first object to the first target node in the second node based on the file information of the first target file and the number information of the client.

In response to the recognition indication, the first target node compares the encryption feature of the first object based on the received encryption feature of the first object, the first target file, and the evaluation key of the first node, to obtain the comparison result.

According to the foregoing technical solution, the scheduling node in the second node can schedule the plurality of target nodes in parallel based on an indication of the first node, recognize the client, and implement a physical parallel operation by using a correspondence between the target node and a number of the client, so that real-time information recognition is ensured while information processing efficiency is improved.

In a possible implementation, the scheduling node in the second node is configured to: in response to the recognition indication, send the recognition indication and the encryption feature of the first object to the first target node in the second node based on the file information of the first target file when the number information received from the client is consistent with the number information of the client carried in the recognition indication.

In the foregoing technical solution, consistency verification is performed on number information from two different sources, so that information security is effectively ensured.

In a possible implementation, the first target node in the second node is configured to perform, in a ciphertext state based on the evaluation key of the first node, an inner product operation on the received encryption feature of the first object and each registered feature in the first target file, to obtain the comparison result.

In a possible implementation, the first node is configured to: determine a target feature based on the decrypted comparison result, where the target feature is a registered feature with a maximum similarity to the feature of the first object;
obtain object information of the target feature from the file information table based on location information of the target feature in the first target file, where the file information table includes object information of each registered feature in a file in the second node and location information of each registered feature in the file in the second node; and
determine the object information of the target feature as the object information of the first object.

In a possible implementation, the client is further configured to send a registration request to the first node, where the registration request carries the number information of the client and object information of a to-be-registered second object.

The first node is further configured to: in response to the registration request, determine a second target file in a second target node in the second node, send file information of the second target file to the client, and send a registration indication to the second node, where the registration indication carries the number information of the client and the file information of the second target file.

The client is further configured to send an encryption feature of the second object and the number information of the client to the second node, where the encryption feature of the second object is obtained based on the public key of the first node, a feature of the second object, and the file information of the second target file.

The second node is further configured to: in response to the registration indication, add the encryption feature of the second object to the second target file through the second target node based on the received encryption feature of the second object, the number information of the client, the file information of the second target file, and the evaluation key of the first node, and send addition success information to the first node.

The first node is further configured to: when receiving the addition success information, add the object information of the second object to the file information table, and send registration success information to the client, where the file information table includes the object information of each registered feature in the file in the second node and the location information of each registered feature in the file in the second node.

In a possible implementation, the file information of the second target file includes a vacant location number of the second target file.

The client is further configured to: encode the feature of the second object, to obtain a first feature vector of the second object, where the first feature vector of the second object is an M-dimensional vector;
obtain a second feature vector of the second object based on the first feature vector of the second object and the vacant location number, where the second feature vector of the second object is N×M-dimensional vectors, the first feature vector of the second object is located at a location that corresponds to the vacant location number and that is in the second feature vector of the second object, and a location other than the location that corresponds to the vacant location number and that is in the second feature vector of the second object is 0; and
encrypt the second feature vector of the second object based on the public key of the first node, to obtain the encryption feature of the second object, where
M and N are positive integers.

According to the foregoing technical solution, in a registration process, registration encoding is used to ensure that registration is performed based on a vacant location in the second target file corresponding to the to-be-registered object, and the registration process does not affect another registered feature. This implements dynamic registration in an encrypted state, improves flexibility of information processing, and improves information processing efficiency on a basis of ensuring information security.

In a possible implementation, the client is further configured to send a deregistration request to the first node, where the deregistration request carries the number information of the client and object information of a to-be-deregistered third object.

The first node is further configured to: in response to the deregistration request, determine a third target file in which a registered feature corresponding to the third object is located in a third target node in the second node, and send a deregistration indication to the second node, where the deregistration indication carries the number information of the client and file information of the third target file, the file information of the third target file includes a location number, in the third target file, of the registered feature corresponding to the third object.

The second node is further configured to: in response to the deregistration indication, delete, from the third target file through the third target node based on the number information of the client, the file information of the third target file, and the evaluation key of the first node, the registered feature corresponding to the third object, and send deletion success information to the first node.

The first node is further configured to: when receiving the deletion success information, delete, from the file information table, the object information of the third object and location information, in the third target file, of the registered feature corresponding to the third object, and send deregistration success information to the client, where the file information table includes the object information of each registered feature in the file in the second node and the location information of each registered feature in the file in the second node.

According to the foregoing technical solution, in a process of performing information deregistration, based on the information mapping relationship stored in the file information table, it is ensured that deregistration is performed on the registered feature of the to-be-deregistered object, and the deregistration process does not affect another registered feature. This implements dynamic deregistration in an encrypted state, improves flexibility of information processing, and improves information processing efficiency on a basis of ensuring information security.

According to a second aspect, an information processing system is provided. The information processing system includes: a client, a third node, and a fourth node.

The client is configured to send, to the third node, a recognition request that carries number information of the client and an encryption feature of a to-be-recognized first object, where the encryption feature of the first object is obtained based on a public key of the third node and a feature of the first object.

The third node is configured to: in response to the recognition request, determine file information of a first target file in the third node, compare the encryption feature of the first object based on the received encryption feature of the first object, the file information of the first target file, and an evaluation key of the third node, to obtain a comparison result, and send the comparison result to the fourth node.

The fourth node is configured to: when receiving the comparison result, decrypt the comparison result based on a private key of the third node, and send a decrypted comparison result to the third node.

The third node is further configured to obtain object information of the first object based on the received decrypted comparison result, and send the object information of the first object to the client.

According to the foregoing technical solution, the third node stores information encrypted based on a public key and public object information, and the fourth node stores the private key. This ensures separation of storage permission and decryption permission. When feature information of an object is not sent out from the client, a plurality of nodes interact with each other based on an information mapping relationship. This may implement efficient information processing and effectively ensure information security. Further, the fourth node is only used to provide a decryption service. A process of information exchange between the plurality of nodes is simplified, and information processing efficiency is effectively improved.

In a possible implementation, the client is further configured to: perform encoding based on the feature of the first object, to obtain a first feature vector of the first object, where the first feature vector is an M-dimensional vector;
obtain a second feature vector of the first object based on the first feature vector of the first object, where the second feature vector of the first object is N×M-dimensional vectors, and the second feature vector of the first object includes N first feature vectors of the first object; and
encrypt the second feature vector based on the public key of the third node, to obtain the encryption feature of the first object, where
M and N are positive integers.

In a possible implementation, the third node is configured to determine the file information of the first target file in a file information table based on the number information of the client in the recognition request, where the file information table includes a correspondence between the number information of the client and a file in the third node.

In a possible implementation, the third node is configured to: in response to the recognition request, load the evaluation key of the third node into memory.

In a possible implementation, the third node is configured to: in response to the recognition request, determine the file information of the first target file in the third node based on the number information of the client; and
compare the encryption feature of the first object based on the received encryption feature of the first object, the first target file, and the evaluation key of the third node, to obtain the comparison result.

In a possible implementation, the third node is configured to perform, based on the evaluation key of the third node, an inner product operation on the received encryption feature of the first object and each registered feature in the first target file, to obtain the comparison result.

In a possible implementation, the third node is configured to: determine a target feature based on the decrypted comparison result, where the target feature is a registered feature with a maximum similarity to the feature of the first object;
obtain object information of the target feature from the file information table based on location information of the target feature in the first target file, where the file information table includes object information of each registered feature in the file in the third node and location information of each registered feature in the file in the third node; and
determine the object information of the target feature as the object information of the first object.

In a possible implementation, the client is further configured to send a registration request to the third node, where the registration request carries the number information of the client and object information of a to-be-registered second object.

The third node is further configured to: in response to the registration request, determine a second target file in the third node based on the number information of the client, and send file information of the second target file to the client.

The client is further configured to send an encryption feature of the second object to the third node, where the encryption feature of the second object is obtained based on the public key of the third node, a feature of the second object, and the file information of the second target file.

The third node is further configured to add the encryption feature of the second object to the second target file based on the received encryption feature of the second object, the file information of the second target file, and the evaluation key of the third node.

The third node is further configured to: when successfully adding the encryption feature of the second object, add the object information of the second object to the file information table, and send registration success information to the client, where the file information table includes the object information of each registered feature in the file in the third node and the location information of each registered feature in the file in the third node.

In a possible implementation, the file information of the second target file includes a vacant location number of the second target file.

The client is further configured to: encode the feature of the second object, to obtain a first feature vector of the second object, where the first feature vector of the second object is an M-dimensional vector;
obtain a second feature vector of the second object based on the first feature vector of the second object and the vacant location number, where the second feature vector of the second object is N×M-dimensional vectors, the first feature vector of the second object is located at a location that corresponds to the vacant location number and that is in the second feature vector of the second object, and a location other than the location that corresponds to the vacant location number and that is in the second feature vector of the second object is 0; and
encrypt the second feature vector of the second object based on the public key of the third node, to obtain the encryption feature of the second object, where
M and N are positive integers.

In the foregoing technical solution, in a process of performing information registration, registration encoding is used to ensure that registration is performed based on a vacant location in the second target file corresponding to the to-be-registered object, and the registration process does not affect another registered feature. This implements dynamic registration in an encrypted state, improves flexibility of information processing, and improves information processing efficiency on a basis of ensuring information security.

In a possible implementation, the client is further configured to send a deregistration request to the third node, where the deregistration request carries the number information of the client and object information of a to-be-deregistered third object.

The third node is further configured to: in response to the deregistration request, determine a third target file in which a registered feature corresponding to the third object is located in the plurality of third nodes.

The third node is further configured to delete, from the third target file based on file information of the third target file and the evaluation key of the third node, the registered feature corresponding to the third object, where the file information of the third target file includes a location number, in the third target file, of the registered feature corresponding to the third object.

The third node is further configured to: when successfully deleting the registered feature corresponding to the third object, delete, from the file information table, the object information of the third object and location information, in the third target file, of the registered feature corresponding to the third object, and send deregistration success information to the client, where the file information table includes the object information of each registered feature in the file in the third node and the location information of each registered feature in the file in the third node.

According to the foregoing technical solution, in a process of performing information deregistration, based on the information mapping relationship stored in the file information table, it is ensured that deregistration is performed on the registered feature of the to-be-deregistered object, and the deregistration process does not affect another registered feature. This implements dynamic deregistration in an encrypted state, improves flexibility of information processing, and improves information processing efficiency on a basis of ensuring information security.

According to a third aspect, an information processing method is provided. The method is performed by a client in an information processing system, the information processing system further includes a first node and a second node, and the method includes:
sending, to the first node, a recognition request that carries number information of the client;
sending an encryption feature of a to-be-recognized first object and the number information of the client to the second node, where the encryption feature of the first object is obtained based on a public key of the first node and a feature of the first object; and
receiving object information of the first object from the first node, where the object information of the first object is obtained based on the encryption feature of the first object, an evaluation key of the first node, and a private key of the first node.

In a possible implementation, before the sending an encryption feature of a to-be-recognized first object and the number information of the client to the second node, the method further includes:
performing encoding based on the feature of the first object, to obtain a first feature vector of the first object, where the first feature vector is an M-dimensional vector;
obtaining a second feature vector of the first object based on the first feature vector of the first object, where the second feature vector of the first object is N×M-dimensional vectors, and the second feature vector of the first object includes N first feature vectors of the first object; and
encrypting the second feature vector of the first object based on the public key of the first node, to obtain the encryption feature of the first object, where
M and N are positive integers.

In a possible implementation, the method further includes:
sending a registration request to the first node, where the registration request carries the number information of the client and object information of a to-be-registered second object;
sending an encryption feature of the second object and the number information of the client to the second node, where the encryption feature of the second object is obtained based on the public key of the first node, a feature of the second object, and file information of a second target file in the second node, and the file information of the second target file is determined by the first node in response to the registration request; and
receiving registration success information from the first node.

In a possible implementation, the file information of the second target file includes a vacant location number of the second target file, and before the sending an encryption feature of the second object and the number information of the client to the second node, the method further includes:
performing encoding based on the feature of the second object, to obtain a first feature vector of the second object, where the first feature vector of the second object is an M-dimensional vector;
obtaining a second feature vector of the second object based on the first feature vector of the second object and the vacant location number, where the second feature vector of the second object is N×M-dimensional vectors, the first feature vector of the second object is located at a location that corresponds to the vacant location number and that is in the second feature vector of the second object, and a location other than the location that corresponds to the vacant location number and that is in the second feature vector of the second object is 0; and
encrypting the second feature vector of the second object based on the public key of the first node, to obtain the encryption feature of the second object, where
M and N are positive integers.

In a possible implementation, the method further includes:
sending a deregistration request to the first node, where the deregistration request carries the number information of the client and object information of a to-be-deregistered third object; and
receiving deregistration success information from the first node.

According to a fourth aspect, an information processing method is provided. The method is performed by a first node in an information processing system, the information processing system further includes a client and a second node, and the method includes:
determining a first target file in the second node in response to a recognition request that is received from the client and that carries number information of the client, and sending a recognition indication to the second node, where the recognition indication carries the number information of the client and file information of the first target file; and
when receiving a comparison result from the second node, decrypting the comparison result based on a private key of the first node, obtaining object information of a first object based on a decrypted comparison result, and sending the object information of the first object to the client, where
the comparison result is obtained by performing, by the second node in response to the recognition indication, comparison on an encryption feature of the first object based on the encryption feature of the first object, the number information of the client, the file information of the first target file, and an evaluation key of the first node; and the encryption feature of the first object is obtained by the client based on a public key of the first node and a feature of the first object.

In a possible implementation, the second node includes a scheduling node and a plurality of target nodes, and the determining a first target file in the second node in response to a recognition request that is received from the client and that carries number information of the client includes:
determining, in a file information table based on the number information of the client in the recognition request, a first target node that corresponds to the client and that is in the second node, and determining, in the file information table, the file information of the first target file in the first target node, where the file information table includes a correspondence between the number information of the client and the plurality of target nodes included in the second node, and a correspondence between the plurality of target nodes and files.

In a possible implementation, the obtaining object information of a first object based on a decrypted comparison result includes:
determining, by the first node, a target feature based on the decrypted comparison result, where the target feature is a registered feature with a maximum similarity to the feature of the first object;
obtaining object information of the target feature from the file information table based on location information of the target feature in the first target file, where the file information table includes object information of each registered feature in a file in the second node and location information of each registered feature in the file in the second node; and
determining the object information of the target feature as the object information of the first object.

In a possible implementation, the method further includes:
in response to a registration request received from the client, determining a second target file in a second target node in the second node, sending file information of the second target file to the client, and sending a registration indication to the second node, where the registration request carries the number information of the client and object information of a to-be-registered second object, and the registration indication carries the number information of the client and the file information of the second target file; and
when receiving addition success information from the second node, adding the object information of the second object to the file information table, and sending registration success information to the client, where the file information table includes the object information of each registered feature in the file in the second node and the location information of each registered feature in the file in the second node, and the addition success information indicates that an encryption feature of the second object has been added to the second target file.

In a possible implementation, the method further includes:
in response to a deregistration request received from the client, determining a third target file in which a registered feature corresponding to a third object is located in a third target node in the second node, and sending a deregistration indication to the second node, where the deregistration indication carries the number information of the client and file information of the third target file, and the deregistration request carries the number information of the client and object information of the to-be-deregistered third object; and
when receiving deletion success information from the second node, deleting, from the file information table, the object information of the third object and location information, in the third target file, of the registered feature corresponding to the third object, and sending deregistration success information to the client, where the file information table includes the object information of each registered feature in the file in the second node and the location information of each registered feature in the file in the second node, and the deletion success information indicates that the registered feature corresponding to the third object has been deleted from the third target file.

According to a fifth aspect, an information processing method is provided. The method is performed by a second node in an information processing system, the information processing system further includes a client and a first node, and the method includes:
comparing, in response to a recognition indication received from the first node, an encryption feature of a first object based on the encryption feature, of the to-be-recognized first object, that is received from the client, number information of the client, file information of a first target file in the second node, and an evaluation key of the first node, to obtain a comparison result, and sending the comparison result to the first node, where
the recognition indication carries the number information of the client and the file information of the first target file, the encryption feature of the first object is obtained based on a public key of the first node and a feature of the first object, and the comparison result is used to determine object information of the first object.

In a possible implementation, the method further includes:
in response to the recognition indication, indicating, by a scheduling node in the second node, a first target node to load the evaluation key of the first node into memory.

In a possible implementation, the second node includes the scheduling node and a plurality of target nodes, and the comparing, in response to a recognition indication received from the first node, an encryption feature of a first object based on the encryption feature, of the to-be-recognized first object, that is received from the client, number information of the client, file information of a first target file in the second node, and an evaluation key of the first node, to obtain a comparison result includes:
sending, by the scheduling node in response to the recognition indication, the recognition indication and the encryption feature of the first object to the first target node in the second node based on the file information of the first target file and the number information of the client; and
comparing, by the first target node in response to the recognition indication, the encryption feature of the first object based on the received encryption feature of the first object, the first target file, and the evaluation key of the first node, to obtain the comparison result.

In a possible implementation, the sending, in response to the recognition indication, the recognition indication and the encryption feature of the first object to the first target node in the second node includes:
sending, by the scheduling node in the second node in response to the recognition indication, the recognition indication and the encryption feature of the first object to the first target node in the second node based on the file information of the first target file when the number information received from the client is consistent with the number information of the client carried in the recognition indication.

In a possible implementation, the comparing an encryption feature of a first object based on the encryption feature, of the to-be-recognized first object, that is received from the client, number information of the client, file information of a first target file in the second node, and an evaluation key of the first node, to obtain a comparison result include:
performing, in a ciphertext state based on the evaluation key of the first node, an inner product operation on the received encryption feature of the first object and each registered feature in the first target file, to obtain the comparison result.

In a possible implementation, the method further includes:
in response to a registration indication received from the first node, adding an encryption feature of a second object to a second target file based on the encryption feature, of the to-be-registered second object, that is received from the client, the number information of the client, file information of the second target file in a second target node in the second node, and the evaluation key of the first node, and sending addition success information to the first node, where the encryption feature of the second object is obtained based on the public key of the first node, a feature of the second object, and the file information of the second target file.

In a possible implementation, the method further includes:
in response to a deregistration indication received from the first node, deleting, from a third target file based on the number information of the client, file information of the third target file in which a registered feature corresponding to a third object is located in a third target node in the second node, and the evaluation key of the first node, the registered feature corresponding to the third object, and sending deletion success information to the first node, where the deregistration indication carries the number information of the client and the file information of the third target file.

According to a sixth aspect, an information processing method is provided. The method is performed by a third node in an information processing system, the information processing system further includes a client and a fourth node, and the method includes:
in response to a recognition request received from the client, determining file information of a first target file in the third node, comparing an encryption feature of a first object based on the encryption feature, of the to-be-recognized first object, that is received from the client, the file information of the first target file, and an evaluation key of the third node, to obtain a comparison result, and sending the comparison result to the fourth node, where the recognition request carries number information of the client, and the encryption feature of the first object is obtained based on a public key of the third node and a feature of the first object; and
obtaining object information of the first object based on a decrypted comparison result received from the fourth node, and sending the object information of the first object to the client, where the decrypted comparison result is obtained by decrypting, by the fourth node, the comparison result based on a private key of the third node.

According to a seventh aspect, a computing device is provided. The computing device can include a processor and a memory. The memory is configured to store at least one segment of program code, and the at least one segment of program code is loaded by the processor and is used to perform the information processing method provided in the third aspect, or the information processing method provided in the fourth aspect, or the information processing method provided in the fifth aspect, or the information processing method provided in the sixth aspect.

According to an eighth aspect, a computer-readable storage medium is provided. The computer-readable storage medium is used to store at least one segment of program code; and when the at least one segment of program code in the computer-readable storage medium is executed by a processor of a computing device, the computing device is enabled to perform the information processing method provided in the third aspect, or the information processing method provided in the fourth aspect, or the information processing method provided in the fifth aspect, or the information processing method provided in the sixth aspect.

According to a ninth aspect, a computer program product is provided. When the computer program product runs on a computing device, the computing device is enabled to perform the information processing method provided in the third aspect, or the information processing method provided in the fourth aspect, or the information processing method provided in the fifth aspect, or the information processing method provided in the sixth aspect.

### BRIEF DESCRIPTION OF DRAWINGS

FIG. 1 is a schematic diagram of an architecture of an information processing system according to an embodiment of this application;
FIG. 2 is a schematic diagram of a hardware structure of a computing device according to an embodiment of this application;
FIG. 3A and FIG. 3B are a schematic flowchart of an information processing method according to an embodiment of this application;
FIG. 4 is a schematic diagram of a file information table according to an embodiment of this application;
FIG. 5 is a schematic diagram of a registration process according to an embodiment of this application;
FIG. 6 is a schematic diagram of a registration process according to an embodiment of this application;
FIG. 7A and FIG. 7B are a schematic flowchart of an information processing method according to an embodiment of this application;
FIG. 8 is a schematic diagram of a recognition process according to an embodiment of this application;
FIG. 9 is a schematic diagram of a recognition process according to an embodiment of this application;
FIG. 10 is a schematic flowchart of an information processing method according to an embodiment of this application;
FIG. 11 is a schematic diagram of a deregistration process according to an embodiment of this application;
FIG. 12 is a schematic diagram of an architecture of an information processing system according to an embodiment of this application;
FIG. 13 is a schematic flowchart of an information processing method according to an embodiment of this application;
FIG. 14A and FIG. 14B are a schematic flowchart of an information processing method according to an embodiment of this application;
FIG. 15 is a schematic flowchart of an information processing method according to an embodiment of this application; and
FIG. 16 is a schematic diagram of an architecture of an information processing system according to an embodiment of this application.

### DESCRIPTION OF EMBODIMENTS

To make the objectives, technical solutions, and advantages of this application clearer, the following further describes the implementations of this application in detail with reference to the accompanying drawings.

Before describing the technical solutions provided in embodiments of this application, the following first describes key terms in this application.

Face verification (face verification, FV): Face verification is a technology for determining whether two face images correspond to a same person. This is a two-class problem and is usually applied to face-based login control, access control, identity confirmation, and the like, for example, face-based mobile phone unlocking and operating system login. Face verification involves 1:1 comparison and operations.

Face recognition (face recognition, FR): A recognition system extracts a to-be-recognized face feature from an input face image, and compares and searches in a face database based on the to-be-recognized face feature. If a similarity between the to-be-recognized face feature and a known face image, in the face database, that is the closest to the to-be-recognized face feature is greater than a specific threshold, it is determined that the input face image and the known face image correspond to a same face; otherwise, it is considered that the input face image corresponds to an unknown face. Face recognition is usually used for face-based attendance clocking and personnel search. Face recognition involves 1:N comparison and operations. Compared with face verification, operation workload of face recognition is much larger, and specifically depends on a quantity N of registered faces in the recognition system, where N is a positive integer.

Homomorphic encryption (homomorphic encryption, HE): A homomorphic encryption technology may implement a homomorphic operation on a ciphertext state of data. A result of decrypting an operation result of the ciphertext state is equivalent to a result of performing a corresponding operation on a plaintext. This enables the data to be vacant and invisible. Full homomorphic encryption (full homomorphic encryption, FHE) supports any form of operation (including addition and multiplication) on a ciphertext.

Key (secret key, SK): The key is a parameter input in converting a plaintext to a ciphertext (an encryption algorithm) or converting a ciphertext to a plaintext (a decryption algorithm). In a homomorphic encryption technology, a key generated by using a key generation algorithm includes a group including a public key, a private key, and an evaluation key. The public key (public key, PK) is a public parameter, and can be used to encrypt a plaintext to obtain a ciphertext. The private key (private key, PK) is a non-public parameter, and is used to decrypt a ciphertext that is encrypted based on the public key. The evaluation key (evaluation key, EK) is also referred to as an auxiliary calculation key, is used to perform a homomorphic operation (for example, ciphertext multiplication) on a ciphertext, and includes a re-linearization key and a key-switching key. The re-linearization key is used to prevent ciphertext expansion. The key-switching key is used to support a ciphertext rotation operation. The evaluation key can ensure that a result of performing decryption on a result of performing an operation on a ciphertext is equivalent to a result of performing a corresponding operation on a plaintext.

Hierarchical fully homomorphic CKKS algorithm: The CKKS (Cheon-Kim-Kim-Song) algorithm is an approximate computation homomorphic encryption algorithm, and supports floating-point number addition and multiplication homomorphic operations for real or complex numbers. Calculation results obtained are approximate values, and are applicable to scenarios of machine learning model training and the like in which accurate results are not required.

Hierarchical fully homomorphic BFV algorithm: The BFV (Brakerski/Fan-Vercauteren) algorithm is a homomorphic encryption algorithm that supports any form of operation on a ciphertext, and may be constructed based on learning with error (learning with error, LWE) and ring learning with error (ring learning with error, RLWE). In the BFV algorithm, a ciphertext and a key are both represented by vectors, and a product of the ciphertext and the corresponding key is a tensor. Therefore, a ciphertext multiplication operation causes an explosive increase in a number of dimensions of the ciphertext. The BFV algorithm uses a key switching technology, to control expansion of the number of dimensions of the ciphertext vector, so that an expanded number of dimensions of the ciphertext can be restored to an original number of dimensions of the ciphertext through key switching after ciphertext calculation is performed.

Open multi-processing (Open multi-processing, OpenMP) is a set of compiler instructions and library functions, and is designed for parallel programming on shared storage computing devices.

A field programmable gate array (field programmable gate array, FPGA) is a hardware carrier that specifically implements a given function and a technical index of an electronic application system by using an electronic design automation technology. FPGA is one of mainstream devices to implement this approach, and is featured by direct-to-user, high flexibility and great versatility, convenient use and quick implementation, and the like.

An FPGA accelerator card is a professional board for specific fields and applications, and is designed with rich high-speed I/O interfaces and storage resources. The FPGA accelerator card can effectively improve data processing efficiency during hardware development.

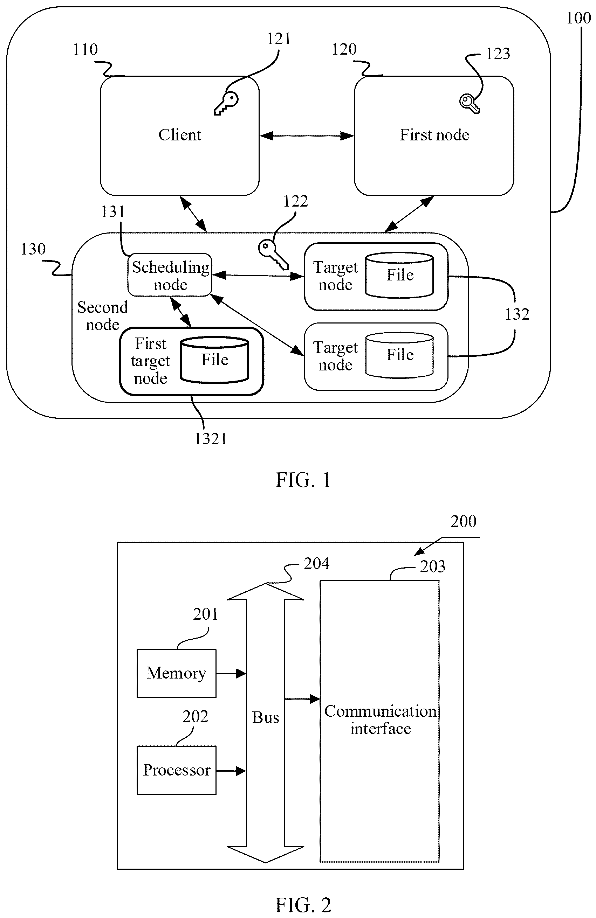

FIG. 1 is a schematic diagram of an architecture of an information processing system according to an embodiment of this application. As shown in FIG. 1, the information processing system 100 includes: a client 110, a first node 120, and a second node 130, where the second node 130 includes a scheduling node 131 and a plurality of target nodes 132.

The client 110 is configured to: when detecting a to-be-recognized object, obtain a feature of the to-be-recognized object, encrypt the obtained feature of the to-be-recognized object based on a public key 121 of the first node 120 to obtain an encryption feature, and send the encryption feature to the second node; and send a recognition request to the first node 120, to indicate the first node to obtain file information required for recognizing the to-be-recognized object.

The first node 120 is configured to store a file information table, obtain, based on the received recognition request, the file information of a file required for recognizing the to-be-recognized object, and send a recognition indication to the second node 130 based on the file information. The recognition indication indicates a first target node 1321 that corresponds to the client and that is in the second node 120, to recognize the client 110.

The scheduling node 131 in the second node 130 is configured to: in response to receiving the recognition indication of the first node, send, to the first target node 1321 corresponding to the client, the recognition indication and the encryption feature that is received from the client node. The first target node 1321 in the second node 130 is configured to: store a file in which a registered feature is located, in response to receiving the recognition indication and the encryption feature, compare the encryption feature based on an evaluation key 122 of the first node 120 and the stored file, to obtain a comparison result, and send the comparison result to the first node 120.

The first node 120 is further configured to: decrypt the received comparison result based on a private key 123 of the first node 120, determine object information (for example, identity information) of the to-be-recognized object based on a decrypted comparison result, and send the object information to the client 110.

The client 110, the first node 120, and the second node 130 are communicatively connected through a wired network or a wireless network. In some embodiments, the foregoing wireless network or wired network uses a standard communication technology and/or protocol. The network is usually the internet, but can also be any network including, but not limited to, a local area network (local area network, LAN), a metropolitan area network (metropolitan area network, MAN), a wide area network (wide area network, WAN), or any combination of a mobile, wired, or wireless network, a private network, or a virtual private network. In some embodiments, peer-to-peer (peer-to-peer, P2P) communication is implemented between the client 110, the first node 120, and the second node 130 based on a remote procedure call protocol (remote procedure call protocol, RPC). In some embodiment, the client 110, the first node 120, and the second node 130 use a technology and/or a format including the hyper text markup language (hyper text markup language, HTML), the extensible markup language (extensible markup language, XML), and the like to represent data exchanged through a network. In addition, the client 110, the first node 120, and the second node 130 can also use conventional encryption technologies of the secure socket layer (secure socket layer, SSL), the transport layer security (transport layer security, TLS), the virtual private network (virtual private network, VPN), the internet protocol security (internet protocol security, IPsec), and the like, to encrypt all or some links. In some other embodiments, custom and/or dedicated data communication technologies can also be used to place or supplement the data communication technologies described above.

In some embodiments, the client is a terminal or a server on a user side. The terminal is also referred to as an intelligent terminal or a mobile intelligent terminal, and refers to a type of device that has rich human-computer interaction manners, has an internet access capability, usually carries various operating systems, and has a strong processing capability. In some embodiments, a type of the mobile intelligent terminal includes but is not limited to a smartphone, a tablet computer, a vehicle-mounted terminal, a handheld game console, and the like. The server may be a server cluster including one or more computing devices.

In some embodiments, the first node and the second node may be independent physical servers, or may be server clusters or distributed systems including a plurality of physical servers, or may be cloud servers that provide basic cloud computing services of cloud services, cloud databases, cloud computing, cloud functions, cloud storage, network services, cloud communication, middleware services, domain name services, security services, content delivery networks (content delivery networks, CDNs), big data, artificial intelligence platforms, and the like.

With reference to FIG. 1, the architecture of the information processing system provided in embodiments of this application is described from a perspective of a system architecture. The following describes hardware structures of a client, a first node, and a second node in the information processing system.

An embodiment of this application provides a computing device that can be configured as any one of the client, the first node, or the second node in the foregoing information processing system. For example, FIG. 2 is a schematic diagram of a hardware structure of a computing device according to an embodiment of this application. As shown in FIG. 2, the computing device 200 includes a memory 201, a processor 202, a communication interface 203, and a bus 204. The memory 201, the processor 202, and the communication interface 203 are communicatively connected to each other through the bus 204.

The memory 201 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that is accessible to a computer. However, this is not limited herein. The memory 201 may store at least one segment of program code. When the program code stored in the memory 201 is executed by the processor 202, the computing device can implement an operation performed by the client in the information processing system. The memory 201 may store a feature of an object, a public key, and the like. This is not limited in this embodiment of this application.

The processor 202 may be a network processor (network processor, NP), a central processing unit (central processing unit, CPU), an application-specific integrated circuit (application-specific integrated circuit, ASIC), or an integrated circuit configured to control program execution of the solutions in this application. The processor 202 may be a single-core (single-CPU) processor, or may be a multi-core (multi-CPU) processor. There may be one or more processors 202. The communication interface 203 uses a transceiver module, for example, a transceiver, to implement communication between the computing device 200 and another device or a communication network. For example, data may be obtained through the communication interface 203.

The memory 201 and the processor 202 may be separately disposed, or may be integrated together.

The bus 204 may include a path for transferring information between various components (for example, the memory 201, the processor 202, and the communication interface 203) of the computing device 200.

The following describes an information processing method provided in embodiments of this application. The method can be applied to the foregoing information processing system.

In embodiments of this application, the public key, the private key, and the evaluation key that are deployed in the information processing system are determined by using a key generation algorithm based on a processing requirement parameter in the system. In some embodiments, the processing requirement parameter includes: (1) dimension information of the feature of the object, where a key generated based on the dimension information of the feature can ensure accuracy of a homomorphic operation performed on an encryption feature of the object based on the evaluation key; (2) a security strength parameter, where the security strength parameter can determine complexity of an encryption algorithm and a decryption algorithm; (3) a recognition performance requirement, where the recognition performance requirement is used to construct an encryption algorithm, a decryption algorithm, and a key that meet a performance requirement; and (4) a maximum quantity of features, where the maximum quantity of features indicates an upper limit of a quantity of features that can be stored in the information processing system. A process of determining the public key, the private key, and the evaluation key by using the key generation algorithm is performed by the first node. The first node configures the public key for the client, where the public key is used to encrypt the obtained feature of the object; and configures the evaluation key for the second node, where the evaluation key is used to perform a homomorphic operation on the encrypted feature (ciphertext). In some embodiments, the first node can configure the public key and the evaluation key for any node. This is not limited in embodiments of this application.

The private key is held only by the first node. To be specific, the first node can decrypt encrypted information in the information processing system. In some embodiments, the first node stores the private key in secure hardware, for example, a trusted execution environment (trusted execution environment, TEE), to ensure security of the private key.

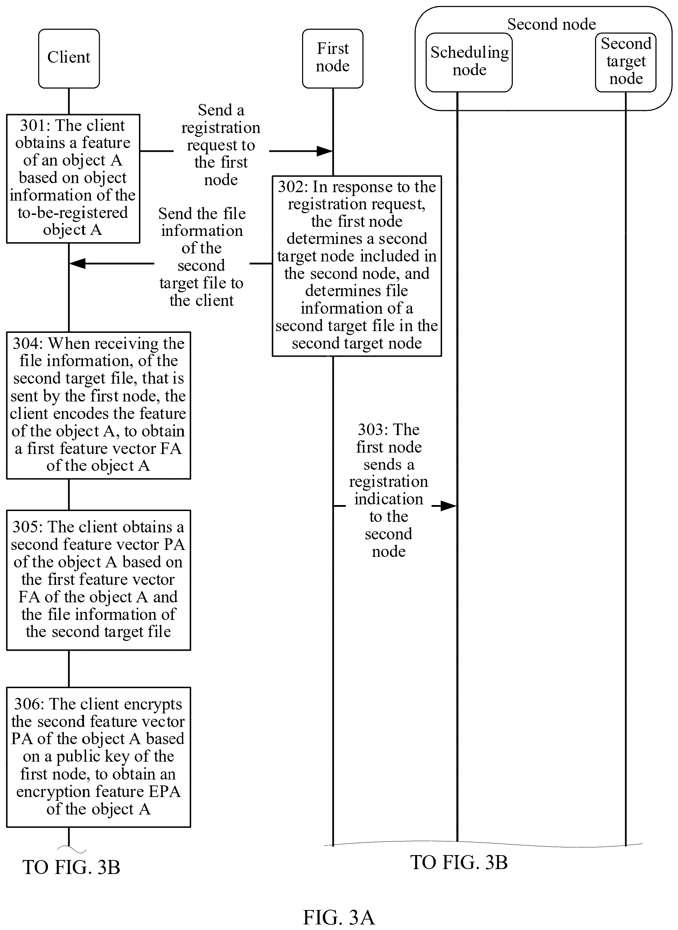

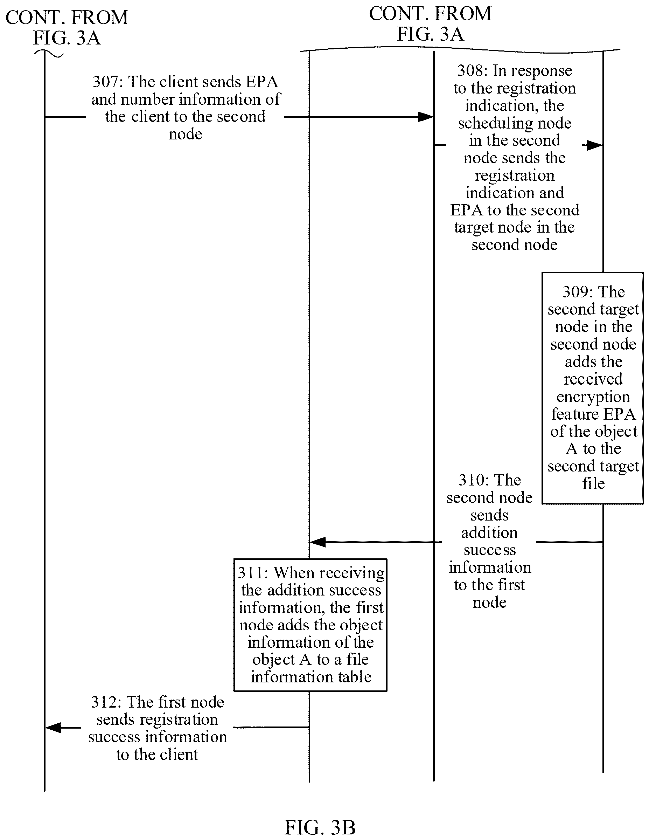

In embodiments of this application, when parameters of the public key, the private key, the evaluation key, and the like have been deployed in the information processing system, the information processing method provided in embodiments of this application may be implemented based on the information processing system. The following describes a process of performing information registration on a to-be-registered object in the information processing method provided in embodiments of this application. FIG. 3A and FIG. 3B are a schematic flowchart of an information processing method according to an embodiment of this application. As shown in FIG. 3A and FIG. 3B, the method includes the following steps.

301: A client sends a registration request to a first node based on object information of a to-be-registered object A, to obtain a feature of the object A, where the registration request carries number information of the client and the object information of the object A.

The number information of the client can uniquely identify the client, and the number information and the object information of the object A are carried in the registration request, so that a specific client that the registration request is from can be indicated.

In some embodiments, the object information includes information used to identify an object in an information processing system. For example, in a facial recognition scenario, the object information refers to a user name input when a user registers with a facial recognition system. In some other embodiments, the object information includes identity information of an object. For example, in a facial recognition scenario, the object information includes a name, an age, an identity card number, and the like that are input when a user registers with a facial recognition system.

302: In response to the registration request, the first node determines a second target node included in the second node, determines file information of a second target file in the second target node, and sends the file information of the second target file to the client.

In this embodiment of this application, the second node is configured to store a file. The file includes a plurality of registered features, and the registered features correspond to a registered object. It may be understood that all the registered features stored in the second node are encryption features of the registered object.

In some embodiments, the second node includes a scheduling node and a plurality of target nodes. The scheduling node is configured to: in response to receiving an indication, forward the indication and related information to a target node corresponding to the indication. The plurality of target nodes are respectively configured to store the registered features corresponding to the registered object. In some embodiments, files stored by the target nodes respectively include different registered objects. For example, in a facial recognition-based scenario, a plurality of departments in a same enterprise correspond to different target nodes, and each target node is configured to store a registered face file of the department. In this example, when receiving the registration request, for the object A, that is initiated by the client, the first node needs to determine the second target node that corresponds to the client and that is in the second node, and then obtain, through the second target node, the second target file required for performing registration based on the client. For example, in the facial recognition-based scenario, when registration is performed by the client, after receiving the registration request of the client, the first node determines, based on department information carried in the registration request, the second target node corresponding to the department, and then stores a facial feature carried in the registration request in the registered face file corresponding to the department.

In some embodiments, the first node stores a file information table. The file information table includes a correspondence between the number information of the client and the plurality of target nodes included in the second node, and a correspondence between the plurality of target nodes and the files. The first node can query, from the file information table based on the number information of the client carried in the registration request, a node number of the target node corresponding to the client, to determine the second target node. Further, the first node can determine, by querying the file information table based on a node number of the second target node, the second target file required for performing registration by the client.

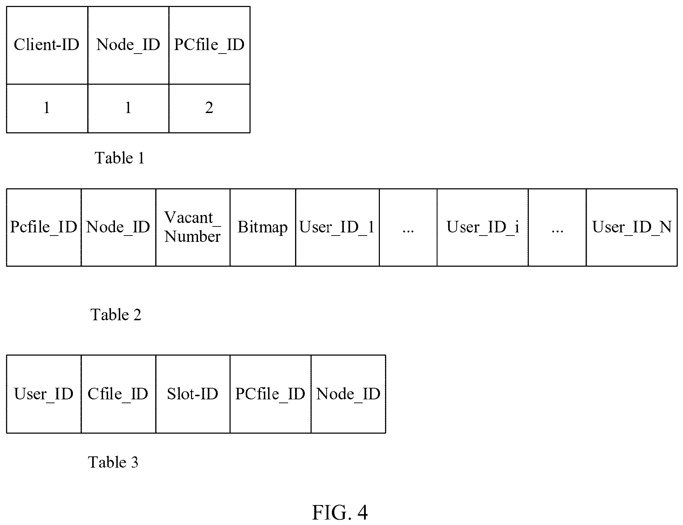

To intuitively describe various types of information stored in the file information table, an embodiment of this application provides a schematic diagram of a file information table. As shown in FIG. 4, the file information table includes Table 1, Table 2, and Table 3. As shown in Table 1 in FIG. 4, content that can be queried from Table 1 is as follows: a client whose client number information (Client-ID) is 1 corresponds to a target node whose node number (Node-ID) is 1 in the second node; and the target node whose node number (Node-ID) is 1 stores a file whose file identifier (PCfile-ID) is 2. Based on this, the second target file required for performing registration by the client whose client number information is 1 is the file whose file identifier is 2 and that is stored in the target node whose node number is 1.

In some embodiments, the file information table includes: a file identifier (PCfile-ID) of a file, a number (Node-ID) of a second node in which the file is located, a bitmap (Bitmap) of the file, and a number of a registered feature in the file. As shown in Table 2 in FIG. 4, a vacant location number of the file is determined based on the bitmap (Bitmap) of the file, and the bitmap indicates an arrangement sequence of vacant location numbers of the file. In some embodiments, the file information table further includes: a total quantity of currently vacant location numbers (vacant-Number) of the file. A vacant location refers to a vacant storage location in the file. Based on this, after determining the second target file based on Table 1 in the file information table, the first node queries Table 2 in the file information table based on number information of the second target node, so that the file information of the second target file may be obtained. The file information includes at least the file identifier and the vacant location number of the file. The first node sends the file information of the second target file to the client, so that the client can process the feature of the object A based on the vacant location number. After registration is completed, it is ensured that the registered feature corresponding to the object A is stored in a corresponding location in the second target file. In some other embodiments, the first node further sends, to the client, the node number, of the second target node, that is found based on Table 1 above.

In some embodiments, the file information table further includes object information of each registered feature in the file in the second node, and location information of the registered feature in the file. For example, the object information may be a user name of the object, and the location information of the registered feature in the file may be a location number of the registered feature in the file. As shown in Table 3 in FIG. 4, Table 3 includes: a user name (User-ID) of the object, a feature identifier (Cfile-ID) of the registered feature of the object, a file identifier (PCfile-ID) of the file in which the registered feature of the object is located, a location number (slot-ID) of the registered feature of the object in the file, and a node number (Node-ID) of a node in which the registered feature of the object is located.

In some other embodiments, the file information table may further include more file-related information, for example, a storage date of the file and permission to modify the file. This is not limited in this embodiment of this application.

303: The first node sends a registration indication to the second node, where the registration indication carries the number information of the client and the file information of the second target file.

In some embodiments, the first node sends the registration indication to the second node, and sends, to the second node, the node number that is of the target node corresponding to the client and that is found in the file information table, to indicate the second target node, in the second node, that corresponds to the node number to perform subsequent steps.

304: When receiving the file information, of the second target file, that is sent by the first node, the client encodes the feature of the object A, to obtain a first feature vector FA of the object A, where FA is an M-dimensional vector, and M is a positive integer.

The first feature vector FA represents the feature of the object A. For example, FA is a face feature vector that is extracted from a face image of the object A and that can represent the feature of the object A. In this step, the feature of the object A is encoded as a vector of a fixed size, so that efficiency of a subsequent operation process can be improved. In some embodiments, M is a power of 2.

305: The client obtains a second feature vector PA of the object A based on the first feature vector FA of the object A and the file information of the second target file, where PA is N×M-dimensional vectors, and M and N are positive integers.

In some embodiments, the file information of the second target file includes the file identifier of the second target file and the vacant location number of the second target file. The client constructs N×M-dimensional vectors PA based on a received vacant location number X (where the vector PA includes N M-dimensional vector spaces), and encodes the M-dimensional vector FA into an X^{th} M-dimensional vector space in PA, where X is less than or equal to N. Based on this, FA is located in a location corresponding to the vacant location number X in PA, and locations other than the location corresponding to the vacant location number X in PA are all 0 vectors. Both M and N are preset positive integers. In some embodiments, both M and N are powers of 2.

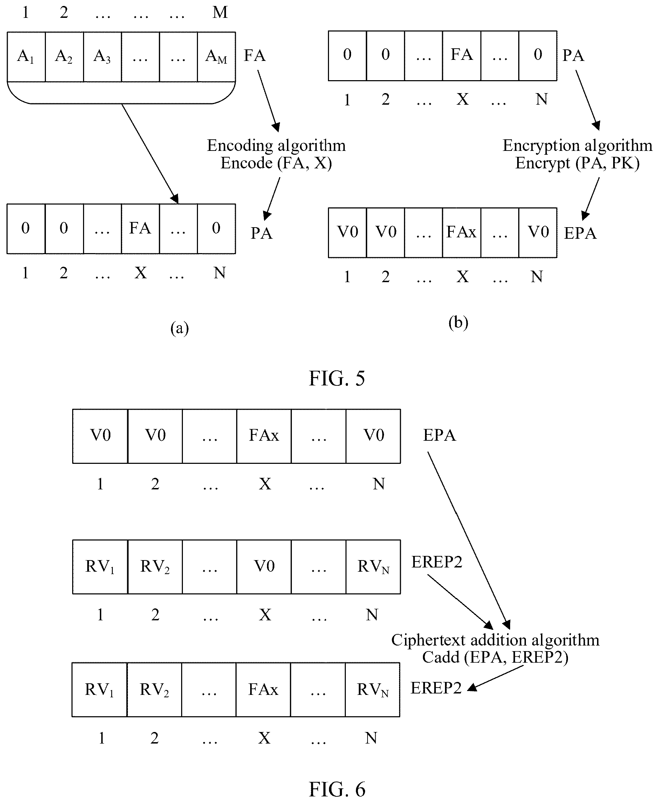

An embodiment of this application provides a schematic diagram of a registration process. FIG. 5 includes (a) and (b). (a) in FIG. 5 is a schematic diagram of a registration encoding process according to an embodiment of this application. (b) in FIG. 5 is a schematic diagram of a registration encryption process according to an embodiment of this application. As shown in (a) in FIG. 5, FA is an M-dimensional first feature vector determined based on the feature of the object A. PA is the second feature vector determined based on an encoding algorithm Encode, and a size is N×M. X is the vacant location number in the second target file.

In some other embodiments, when one client needs to register a plurality of to-be-registered objects, the client may obtain a plurality of vacant location numbers in the second target file, and separately encode first feature vectors of the plurality of to-be-registered objects into a same second feature vector in the foregoing encoding method. This implements algorithm parallelism, and effectively improves information processing efficiency.

According to the foregoing technical solution, based on the file information returned by the first node, the client encodes the feature of the to-be-registered object in the vacant location in the second target file, so that a location of valid information in the to-be-registered encryption feature matches an actual vacant location of the second target file. On a basis of ensuring accuracy of information processing, algorithm parallelism is implemented, and information processing efficiency is effectively improved.

306: The client encrypts the second feature vector PA of the object A based on the public key of the first node, to obtain an encryption feature EPA of the object A.

(b) in FIG. 5 is a schematic diagram of a registration encryption process according to an embodiment of this application. In this embodiment of this application, EPA obtained by encrypting PA based on the public key is N×M-dimensional vectors, and FA obtained after encryption is performed based on the public key is located in an X^{th} M-dimensional ciphertext vector space of EPA, where X is the vacant location number, and ciphertexts, in EPA, other than a location corresponding to the vacant location number X are all ciphertext vectors V0 obtained after the 0 vector is encrypted. As shown in FIG. (b) in FIG. 5, Encrypt is an encryption algorithm, PK is the public key, and FAx is FA obtained after encryption is performed based on the public key.

In some embodiments, PA and the public key PK are used as an input of the encryption algorithm, so that an output, namely, EPA, of the encryption algorithm is obtained. The encryption algorithm may be in a form of a polynomial. To ensure that the second node can perform a homomorphic operation based on the evaluation key, conditions that a quantity of times of the polynomial needs to meet include: (1) The quantity of times of the polynomial is a power of 2; (2) the quantity of times of the polynomial is much greater than a feature dimension M; and (3) the quantity of times of the polynomial is a multiple of M.

According to the foregoing technical solution, the feature of the object is encrypted on a client side, to ensure that a plaintext of user information does not appear in a device other than the client. This effectively ensures information security.

307: The client sends EPA and the number information of the client to the second node.

In some embodiments, the client sends the node number obtained from the first node to the second node, to indicate the second target node in the second node to perform registration based on EPA.

308: In response to the registration indication, the scheduling node in the second node sends the registration indication and EPA to the second target node in the second node based on the file information of the second target file when the number information received from the client is consistent with the number information of the client carried in the registration indication.

In some embodiments, the second node compares whether the number information of the client received from the first node is consistent with the number information of the client received from the client, to ensure that the file information carried in the registration indication this time is file information required for registering the object A. The second node effectively ensures information security by performing consistency verification on the number information from the two different sources.

In some embodiments, the file information of the second target file includes the file identifier of the second target file, the node number of the node in which the second target file is located, and the vacant location number of the second target file. In response to the registration indication, the scheduling node in the second node sends the registration indication and EPA that is received from the client to the second target node corresponding to the node number when determining that the registration indication this time is consistent with that of the client.

In some other embodiments, the scheduling node in the second node receives the node number sent by the first node and the node number sent by the client; and before sending the registration indication and EPA that is received from the client to the second target node, the scheduling node compares whether the node numbers from the two different sources are consistent, to further ensure information security.

According to the foregoing technical solution, the scheduling node in the second node can schedule the plurality of target nodes in parallel based on an indication of the first node, perform information registration for the client, and implement a physical parallel operation by using a correspondence between the target node and a number of the client, so that information processing efficiency is greatly improved.

309: The second target node in the second node adds the received encryption feature EPA of the object A to the second target file.

The second target file includes the plurality of registered features, and the plurality of registered features are all ciphertexts encrypted based on the public key. Therefore, the second target node adds the encryption feature encrypted based on the public key to the second target file in a ciphertext state. For example, the second target node adds the encryption feature encrypted based on the public key to the second target file, to obtain an updated second target file. Because parts of a newly registered encryption feature other than the vacant location are all 0, another registered feature in the second target file is not affected, so that a purpose of storing a plurality of features in a file in parallel is achieved.

In some embodiments, EPA is N×M-dimensional vectors, and FA encrypted based on the public key is located in an X^{th} M-dimensional ciphertext vector space of EPA. The second target file is N×M-dimensional vectors EREP2, and N registered features in the second target file are all in a form of an M-dimensional vector, and are respectively located in N M-dimensional ciphertext vector spaces. X is a vacant location number of EREP2. To be specific, an X^{th} M-dimensional ciphertext vector space of EREP2 may be used to store the new registered feature. EPA and EREP2 are added in the ciphertext vector space, so that encrypted FA may be stored in the X^{th} M-dimensional ciphertext vector space of EREP2. Based on this, the second node stores EPA and EREP2 to which EPA is added. In this case, EREP2 includes the registered feature of the object A. It may be understood that ciphertexts in EPA other than the X^{th} M-dimensional ciphertext vector space are all encrypted 0 vectors. Therefore, in an addition process, a registered feature other than the vacant location in EREP2 is not affected.

To intuitively describe the foregoing addition process, an embodiment of this application provides a schematic diagram of a registration process. As shown in FIG. 6, EPA is the encryption feature of the object A, and a size is N×M. EREP2 is the second target file, has a size of N×M, and includes N registered features RV. CAdd is a ciphertext addition algorithm.

310: The second node sends addition success information to the first node.

In some embodiments, the second target node in the second node returns the addition success information to the scheduling node in the second node, and the scheduling node sends the addition success information to the first node.

311: When receiving the addition success information, the first node adds the object information of the object A to the file information table, where the file information table includes the object information of each registered feature in the file in the second node and the location information of each registered feature in the file in the second node.

When the second node has stored the registered feature of the object A, the first node adds the object information of the object A and the location information of the registered feature of the object A in the second target file to the file information table. In some embodiments, the location information includes the location number of the registered feature of the object A in the second target file. In some embodiments, the first node adds the object information of the object A to the file information table. For example, in Table 2 in FIG. 4, the first node writes the user name of the object A at the location corresponding to the vacant location number X in Table 2 that corresponds to the second target file. A new column is added to Table 3 in FIG. 4, and is used to record the user name of the object A, the feature identifier of the registered feature of the object A, the file identifier of the second target file in which the registered feature of the object A is located, the location number of the registered feature of the object A in the second target file, and the number of the node in which the registered feature of the object A is located.

312: The first node sends registration success information to the client.

According to the foregoing technical solution, the first node stores the private key and public object information, and the second node stores information obtained by encryption based on the public key of the first node. This ensures separation of storage permission and decryption permission. When feature information of an object is not sent out from the client, a plurality of nodes interact with each other based on an information mapping relationship. This may implement efficient information processing and effectively ensure information security.

Further, in a process of performing information registration, registration encoding is used to ensure that registration is performed based on a vacant location in the second target file corresponding to the to-be-registered object, and the registration process does not affect another registered feature. This implements dynamic registration in an encrypted state, improves flexibility of information processing, and improves information processing efficiency on a basis of ensuring information security.

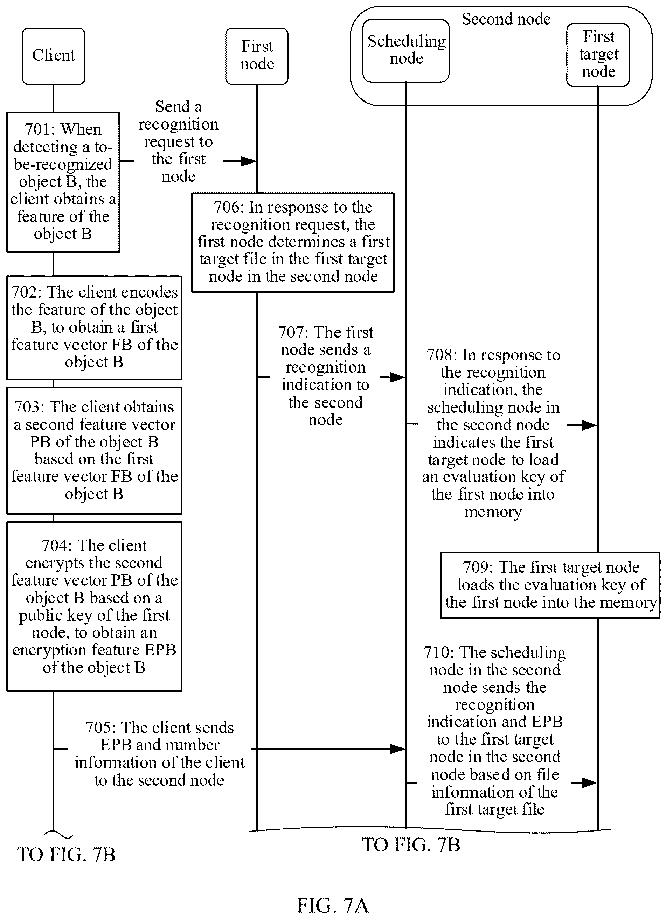

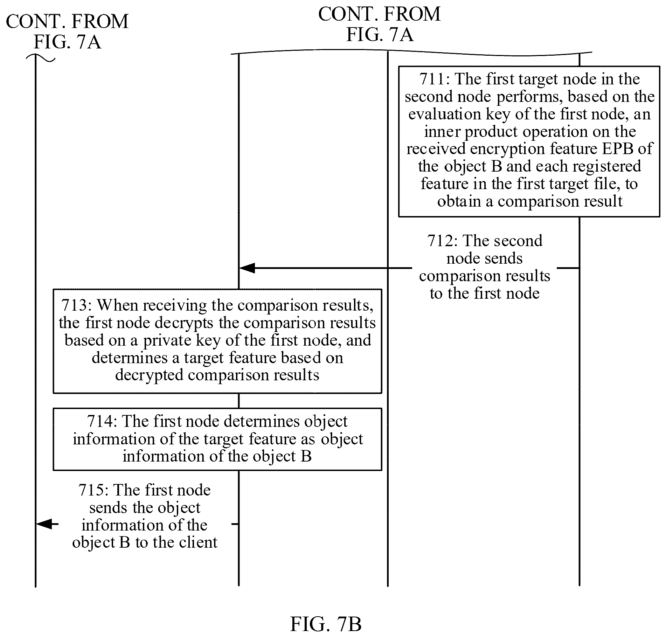

After the information registration process in the information processing method provided in embodiments of this application is described, the following describes an information recognition process in the information processing method provided in embodiments of this application. FIG. 7A and FIG. 7B are a schematic flowchart of an information processing method according to an embodiment of this application. As shown in FIG. 7A and FIG. 7B, the method includes the following steps.

701: When detecting a to-be-recognized object B, a client sends a recognition request to a first node, to obtain a feature of the object B, where the recognition request carries number information of the client.

For this step, refer to step 301. For example, in a facial recognition-based scenario, the client detects a face, triggers a face-based recognition request, sends the recognition request to the first node, and processes the detected face, to obtain a facial feature.

702: The client encodes the feature of the object B, to obtain a first feature vector FB of the object B, where FB is an M-dimensional vector, and M is a positive integer.

For this step, refer to step 304. Details are not described herein. In some embodiments, M is a power of 2.

It should be noted that, in step 701, the step of sending the recognition request to the first node and the step of obtaining the feature of the object B may be simultaneously performed or may be sequentially performed. This is not limited in this embodiment of this application.

703: The client obtains a second feature vector PB of the object B based on the first feature vector FB of the object B, where PB is N×M-dimensional vectors, and M and N are positive integers.

In some embodiments, the client constructs N×M-dimensional vectors PB (where the vector PB includes N M-dimensional vector spaces), and encodes an M-dimensional vector FB into each M-dimensional vector space in PB. Based on this, PB includes N vectors FB, and both M and N are preset positive integers. In some embodiments, both M and N are powers of 2.

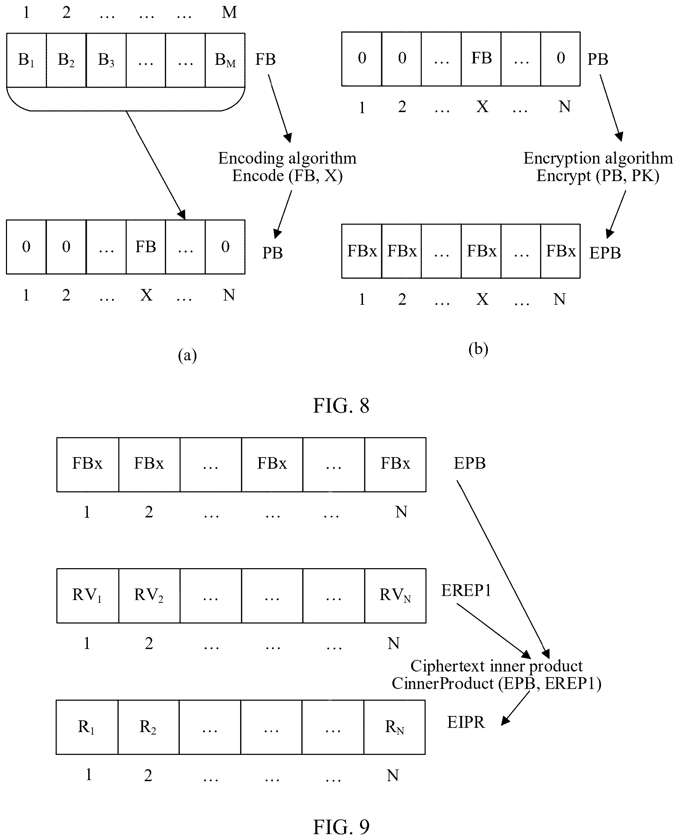

An embodiment of this application provides a schematic diagram of a recognition process. FIG. 8 includes (a) and (b). (a) in FIG. 8 is a schematic diagram of a recognition encoding process according to an embodiment of this application. (b) in FIG. 8 is a schematic diagram of a recognition encryption process according to an embodiment of this application. As shown in (a) in FIG. 8, FB is an M-dimensional first feature vector determined based on the feature of the object B. PB is a second feature vector determined based on an encoding algorithm Encode, and a size is N×M.

704: The client encrypts the second feature vector PB of the object B based on a public key of the first node, to obtain an encryption feature EPB of the object B.

For this step, refer to step 306. Details are not described herein.

(b) in FIG. 8 is a schematic diagram of a recognition encryption process according to an embodiment of this application. Encrypt is an encryption algorithm, PK is the public key, EPB obtained by encrypting PB based on the public key is N×M-dimensional vectors, and FBx is FB encrypted based on the public key.

705: The client sends EPB and the number information of the client to a second node.

706: In response to the recognition request, the first node determines a first target file in a first target node in the second node.

In this step, the first node queries, based on the number information of the client in the recognition request, a file information table stored in the first node, to determine the first target file. For a principle, refer to step 302. Details are not described herein.

It may be understood that, in some embodiments, because registered objects corresponding to files in a plurality of target nodes included in the second node are different, the first target node that corresponds to the client and that is in the second node needs to be determined based on the number information of the client, and then the first target node is used, so that the first target file required for performing recognition based on the client can be obtained. For example, in a facial recognition-based scenario, when recognition is performed by the client, after receiving the recognition request of the client, the first node determines, based on department information carried in the recognition request, the first target node corresponding to the department, to perform recognition in a registered face file of the department.

707: The first node sends a recognition indication to the second node, where the recognition indication carries the number information of the client and file information of the first target file.

For this step, refer to step 303. Details are not described herein.

708: In response to the recognition indication, a scheduling node in the second node indicates the first target node to load an evaluation key of the first node into memory.

Each target node in the second node stores the evaluation key of the first node. Because a data volume of the evaluation key is usually large, the node loads the evaluation key to the memory when using the evaluation key, to prevent the evaluation key from occupying running memory in another case. In some embodiments, in response to the recognition indication received from the first node, the scheduling node in the second node indicates, based on a node number included in the file information in the recognition indication, the first target node corresponding to the node number to load the evaluation key of the first node into the memory. Based on this, when receiving the recognition indication, the first target node directly loads the evaluation key, so that when receiving the encryption feature sent by the client, the first target node may directly perform recognition based on the evaluation key in the memory. This reduces time for loading the evaluation key in a recognition process.

According to the foregoing technical solution, a physical data parallel processing capability of a multi-node architecture of the information processing system is fully utilized, and information processing efficiency is greatly improved.

709: The first target node loads the evaluation key of the first node into the memory.

In some embodiments, the foregoing scheduling node can indicate, by sending notification information to the first target node, the first target node to perform loading. Correspondingly, in response to receiving the notification information, the first target node loads the evaluation key of the first node into the memory.

710: The scheduling node in the second node sends the recognition indication and EPB to the first target node in the second node based on the file information of the first target file when the number information received from the client is consistent with the number information of the client carried in the recognition indication.

For this step, refer to step 308. Details are not described herein.

According to the foregoing technical solution, the scheduling node in the second node can schedule the plurality of target nodes in parallel based on an indication of the first node, recognize the client, and implement a physical parallel operation by using a correspondence between the target node and a number of the client, so that real-time information recognition is ensured while information processing efficiency is improved.

711: The first target node in the second node performs, based on the evaluation key of the first node, an inner product operation on the received encryption feature EPB of the object B and each registered feature in the first target file, to obtain a comparison result.

For a principle of this step, refer to step 309. Details are not described herein.

The evaluation key, of the first node, that is used in this step is preloaded into the memory in step 709. In some embodiments, the first target node does not preload the evaluation key of the first node, but starts to load the evaluation key of the first node after receiving EPB of the client and the recognition indication.

In some embodiments, EPB is N×M-dimensional vectors, and FB encrypted based on the public key is located in each M-dimensional ciphertext vector space of EPB. The first target file is N×M-dimensional vectors EREP1, and N registered features in the first target file are all in a form of an M-dimensional vector, and are respectively located in N M-dimensional ciphertext vector spaces. The second node performs a ciphertext inner product operation on EPB and EREP1 in the ciphertext vector space based on the evaluation key, to obtain the comparison result EIPR. It may be understood that each M-dimensional ciphertext vector space in EPB stores FB encrypted based on the public key. Therefore, based on the inner product operation, results of performing inner product operations between the N registered features in EREP1 and encrypted FB separately can be obtained in parallel. The inner product operation essentially compares a similarity between vectors. Therefore, EIPR includes similarities, in N encrypted states, that are obtained by separately comparing the N registered features with encrypted FB.

To intuitively describe a process of obtaining the comparison result, an embodiment of this application provides a schematic diagram of a recognition process. As shown in FIG. 9, EPB is the encryption feature of the object B, and is N×M-dimensional vectors. EREP1 is the first target file, and is N×M-dimensional vectors. CinnerProduct is a ciphertext inner product algorithm. EIPR is the comparison result, and is N×M-dimensional vectors.

It may be understood that the ciphertext inner product operation in this embodiment of this application is a multi-dimensional vector multiplication process. In some embodiments, expansion, of a number of dimensions of a ciphertext vector, caused by vector multiplication is controlled based on the evaluation key, and after ciphertext calculation is performed, key switching is performed, so that an expanded number of feature dimensions of the ciphertext is restored to an original number of feature dimensions of the ciphertext, to reduce an error caused by calculation in the ciphertext state, and improve accuracy of information processing, for example, a hierarchical fully homomorphic CKKS algorithm and a hierarchical fully homomorphic BFV algorithm.

In some embodiments, the inner product operation is calculating a Euclidean distance. In some other embodiments, the inner product operation is calculating a cosine distance. This is not limited in this embodiment of this application.

In some other embodiments, there are a plurality of first target nodes related to the information recognition process. In this case, the second node can schedule the plurality of first target nodes to perform operations based on the first target files respectively stored by the plurality of first target nodes and based on the received encryption feature EPB of the object B in parallel, and obtain a plurality of comparison results determined by the plurality of first target nodes.

712: The second node sends the comparison results to the first node.

In some embodiments, the first target nodes in the second node return the comparison results to the scheduling node in the second node, and the scheduling node sends the plurality of received comparison results to the first node.

713: When receiving the comparison results, the first node decrypts the comparison results based on the private key of the first node, and determines a target feature based on decrypted comparison results, where the target feature is a registered feature with a maximum similarity to the feature of the object B.

In this embodiment of this application, the first node holds the private key. According to a homomorphic encryption principle, a result obtained after the comparison results are decrypted is equivalent to a similarity between the feature of the object B and a feature of each registered object in an unencrypted state. It may be understood that, in a plurality of similarities obtained after decryption, a registered object corresponding to a similarity with a maximum value may be considered as a same object as the object B.

In some embodiments, the decrypted comparison results are N M-dimensional result vectors R. As shown in FIG. 9, a value in a target dimension in each result vector R indicates a similarity of a registered feature corresponding to the value. For example, the comparison results are N 128-dimensional result vectors R, and a value of the first dimension of each R is the similarity. Based on this, the first node obtains, from the decrypted comparison results, a number of the result vector with the similarity whose value is maximum, and determines a registered feature corresponding to the number in the first target file as the target feature.

In some embodiments, a similarity threshold is set. After a maximum similarity is determined, when the similarity is greater than the similarity threshold, a registered feature corresponding to the similarity is determined as the target feature, to further ensure accuracy of the comparison results.

714: The first node obtains the object information of the target feature from the file information table based on the location information of the target feature in the first target file, and determines the object information of the target feature as the object information of the object B, where the file information table includes object information of each registered feature in the file in the second node and location information of each registered feature in the file in the second node.

In this embodiment of this application, for the file information table, refer to descriptions in step 302. Details are not described herein.

In some embodiments, the location information of the target feature in the first target file includes a location number of the target feature in the first target file. The first node may obtain the object information of the target feature from the file information table based on a file identifier of the first target file and the location number of the target feature. For example, the object information may be a user name of a registered object corresponding to the target feature. Based on this, the object information of the object B is determined. Optionally, the object information includes identity information, for example, a name, an age, and an identity card number, of the registered object corresponding to the target feature. This is not limited in this embodiment of this application.

715: The first node sends the object information of the object B to the client.

According to the foregoing technical solution, the first node stores the private key and public object information, and the second node stores information obtained by encryption based on the public key of the first node. This ensures separation of storage permission and decryption permission. When feature information of an object is not sent out from the client, a plurality of nodes interact with each other based on an information mapping relationship. This may implement efficient information processing and effectively ensure information security.

In addition, according to the foregoing technical solution, one-to-many information recognition may be implemented based on a set of keys. This effectively resolves a problem that a large quantity of storage spaces are occupied to store a plurality of sets of keys corresponding to a plurality of registered features.

Further, in the foregoing technical solution, in a process of performing information recognition, a feature of a to-be-recognized object is encoded as a multi-dimensional vector that matches a dimension of the first target file, so that the feature of the to-be-recognized object can be compared with a plurality of registered objects in parallel. This is equivalent to completing an information processing process for the plurality of registered objects in one processing periodicity, so that information processing efficiency is greatly improved.

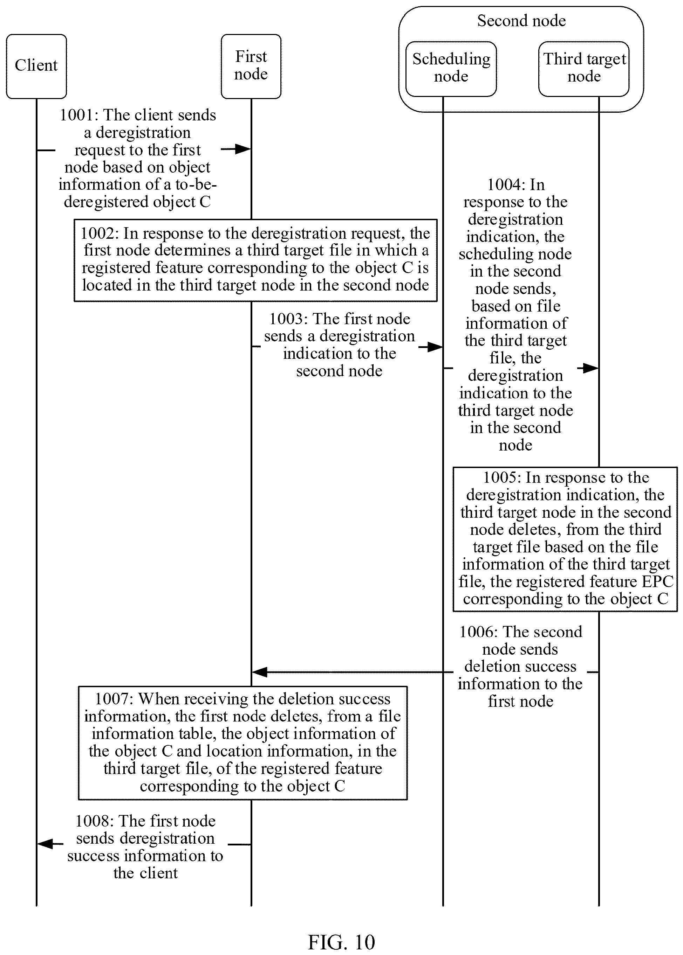

The following describes an information deregistration process in the information processing method provided in embodiments of this application. FIG. 10 is a schematic flowchart of an information processing method according to an embodiment of this application. As shown in FIG. 10, the method includes the following steps.

1001: A client sends a deregistration request to a first node based on object information of a to-be-deregistered object C, where the deregistration request carries number information of the client and the object information of the to-be-deregistered object C.

For this step, refer to step 301. Details are not described herein.

1002: In response to the deregistration request, the first node determines a third target file in which a registered feature corresponding to the object C is located in a third target node in the second node.

In this embodiment of this application, the object C is a registered and to-be-deregistered object. Therefore, a file information table stores the object information of the object C and location information, in a file in the second node, of the registered feature corresponding to the object C.

In some embodiments, in response to the deregistration request, the first node may determine the third target node by querying the file information table based on the information number of the client carried in a to-be-registered request. The third target file in which the registered feature corresponding to the object C is located may be directly determined by querying the file information table based on the object information of the object C. For a principle of this step, refer to step 302. Details are not described herein.

1003: The first node sends a deregistration indication to the second node, where the deregistration indication carries the number information of the client and file information of the third target file.

For this step, refer to step 303. Details are not described herein.

1004: In response to the deregistration indication, when the number information received from the client is consistent with the number information of the client carried in the deregistration indication, a scheduling node in the second node sends, based on the file information of the third target file, the deregistration indication to the third target node in the second node.

For this step, refer to step 308. Details are not described herein.

1005: In response to the deregistration indication, the third target node in the second node deletes, from the third target file based on the file information of the third target file, the registered feature EPC corresponding to the object C.

In some embodiments, in a process of performing information registration on the object C, the registered feature EPC of the object C is stored (refer to the process of adding EPA in step 309). Therefore, the second node obtains EREP3 and EPC based on the file information of the third target file, a file identifier of the third target file EREP3, and a feature identifier of the registered feature EPC of the object C, subtracts EPC and EREP3 from a ciphertext vector space, and stores EREP3 after EPC is deleted. For a principle of this step, refer to step 309. Details are not described herein.

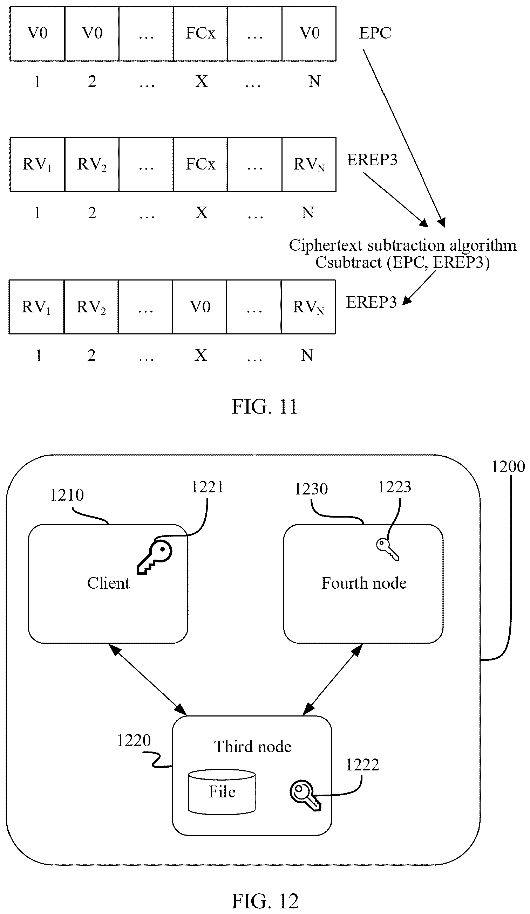

To intuitively describe the foregoing deletion process, an embodiment of this application provides a schematic diagram of a deregistration process. As shown in FIG. 11, EPC is the registered feature of the object C, and a size is N×M. FCx is obtained through encryption by performing registration encoding based on the feature of the object C in the registration process of the object C (refer to step 304 to step 306). EREP3 is the third target file, and a size is N×M. X is a location number of the registered feature of the object C in EREP3. Csubtract is a ciphertext subtraction algorithm.

1006: The second node sends deletion success information to the first node.

For this step, refer to step 310. Details are not described herein.

1007: When receiving the deletion success information, the first node deletes, from the file information table, the object information of the object C and the location information, in the third target file, of the registered feature corresponding to the object C, where the file information table includes object information of each registered feature in the file in the second node and location information of each registered feature in the file in the second node.

When the second node has deleted the registered feature of the object C, the first node deletes, from the file information table, the object information of the object C and the location information of the registered feature of the object C in the second target file. This step is similar to step 311. Details are not described herein.

1008: The first node sends deregistration success information to the client.

According to the foregoing technical solution, the first node stores a private key and public object information, and the second node stores information encrypted based on a public key of the first node. This ensures separation of storage permission and decryption permission. When feature information of an object is not sent out from the client, a plurality of nodes interact with each other based on an information mapping relationship. This may implement efficient information processing and effectively ensure information security.

Further, in a process of performing information deregistration, based on the information mapping relationship stored in the file information table, it is ensured that deregistration is performed on the registered feature of the to-be-deregistered object, and the deregistration process does not affect another registered feature. This implements dynamic deregistration in an encrypted state, improves flexibility of information processing, and improves information processing efficiency on a basis of ensuring information security.

An embodiment of this application provides another information processing system.

FIG. 12 is a schematic diagram of an architecture of an information processing system according to an embodiment of this application. The information processing system 1200 includes a client 1210, a third node 1220, and a fourth node 1230.

The client 1210 is configured to: when detecting a to-be-recognized object, obtain a feature of the to-be-recognized object, encrypt the obtained feature of the to-be-recognized object based on a public key 1221 of the third node 1220, to obtain an encryption feature, and send the encryption feature and a recognition request to the third node 1220, to indicate the third node to recognize the client 1210.

The third node 1220 is configured to store a file information table and a file in which a registered feature is located. The third node 1220 is configured to: in response to the recognition request of the client, compare, based on the file information table, an evaluation key 1222 of the third node 1220, and the stored file, the encryption feature received from the client, to obtain a comparison result, and send the comparison result to the fourth node 1230.

The fourth node 1230 is configured to decrypt the received comparison result based on a private key 1223 of the third node 1220, and send the decrypted comparison result to the third node 1220.

The third node 1220 is further configured to determine object information (for example, identity information) of the to-be-recognized object based on the decrypted comparison result, and send the object information to the client 1210.

The client 1210, the third node 1220, and the fourth node 1230 are communicatively connected through a wired network or a wireless network. In some embodiments, the foregoing wireless network or wired network uses a standard communication technology and/or protocol. The network is usually the internet, but can also be any network including, but not limited to, a local area network (local area network, LAN), a metropolitan area network (metropolitan area network, MAN), a wide area network (wide area network, WAN), or any combination of a mobile, wired, or wireless network, a private network, or a virtual private network. In some embodiments, peer-to-peer (peer-to-peer, P2P) communication is implemented between the client 1210, the third node 1220, and the fourth node 1230 based on a remote procedure call protocol (remote procedure call protocol, RPC). In some embodiment, the client 1210, the third node 1220, and the fourth node 1230 use a technology and/or a format including the hyper text markup language (hyper text markup language, HTML), the extensible markup language (extensible markup language, XML), and the like to represent data exchanged through a network. In addition, the client 1210, the third node 1220, and the fourth node 1230 can also use conventional encryption technologies of the secure socket layer (secure socket layer, SSL), the transport layer security (transport layer security, TLS), the virtual private network (virtual private network, VPN), the internet protocol security (internet protocol security, IPsec), and the like, to encrypt all or some links. In some other embodiments, custom and/or dedicated data communication technologies can also be used to place or supplement the data communication technologies described above.

In some embodiments, the client is a terminal or a server on a user side. The terminal is also referred to as an intelligent terminal or a mobile intelligent terminal, and refers to a type of device that has rich human-computer interaction manners, has an internet access capability, usually carries various operating systems, and has a strong processing capability. In some embodiments, a type of the mobile intelligent terminal includes but is not limited to a smartphone, a tablet computer, a vehicle-mounted terminal, a handheld game console, and the like. The server may be a server cluster including one or more computing devices.

In some embodiments, the third node and the fourth node may be independent physical servers, or may be server clusters or distributed systems including a plurality of physical servers, or may be cloud servers that provide basic cloud computing services of cloud services, cloud databases, cloud computing, cloud functions, cloud storage, network services, cloud communication, middleware services, domain name services, security services, content delivery networks (content delivery networks, CDNs), big data, artificial intelligence platforms, and the like.

In FIG. 12, an architecture of another information processing system provided in this embodiment of this application is described from a perspective of a system architecture. The following describes hardware structures of a client, a third node, and a fourth node in the information processing system.

In FIG. 2, a computing device is provided. The computing device can be configured as any one of the client, the second node, or the third node in the information processing system 1200. Refer to FIG. 2. Details are not described herein.

The following describes an information processing method provided in this embodiment of this application. The method can be applied to the foregoing information processing system 1200.

In this embodiment of this application, before information processing is performed based on the information processing system, a group including a public key, a key, and an evaluation key that are deployed in the information processing system need to be determined based on a processing requirement parameter in the system by using a key generation algorithm. For a principle, refer to the information processing system corresponding to FIG. 1. Details are not described herein. In this embodiment of this application, a process of determining the group including the public key, the key, and the evaluation key by using the key generation algorithm is performed by the third node. The third node configures the public key for the client. The public key is used to encrypt an obtained feature of an object; and send a private key to the fourth node. The private key is used to decrypt encrypted information, where the private key is held only by the fourth node, to be specific, only the fourth node can decrypt the encrypted information in the information processing system. In some embodiments, the fourth node stores the private key in secure hardware, for example, a trusted execution environment (trusted execution environment, TEE), to ensure security of the private key.

The evaluation key is used to perform a homomorphic operation on the encrypted feature (ciphertext). In some embodiments, the third node can configure the public key and the evaluation key for any node in the information processing system. This is not limited in this embodiment of this application.

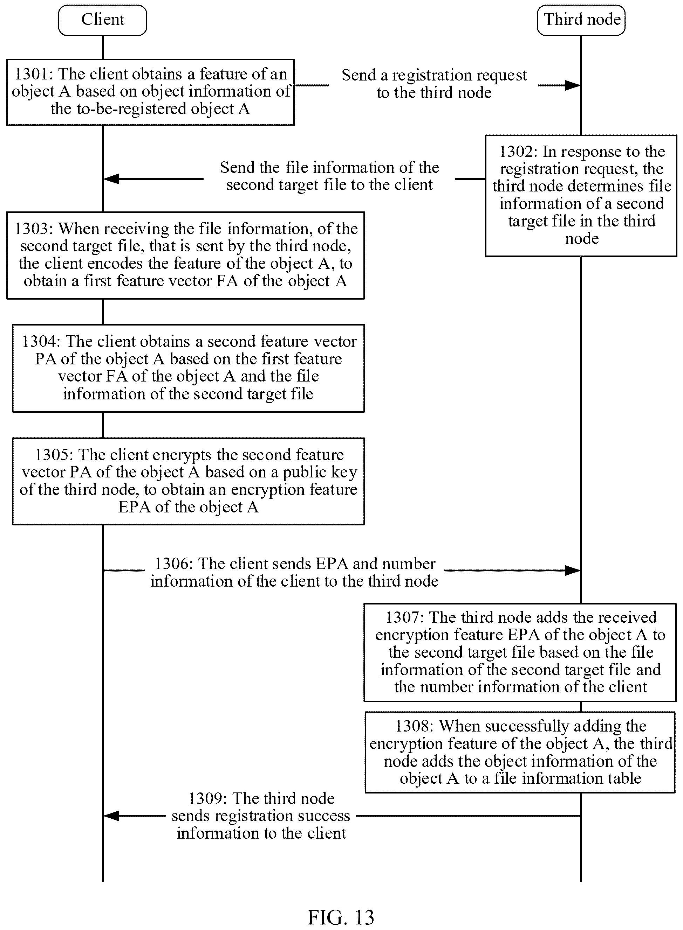

In embodiments of this application, when parameters of the public key, the private key, the evaluation key, and the like have been deployed in the information processing system, the information processing method provided in embodiments of this application may be implemented based on the information processing system. The following describes a process of performing information registration on a to-be-registered object in the information processing method provided in embodiments of this application. FIG. 13 is a schematic flowchart of an information processing method according to an embodiment of this application. As shown in FIG. 13, the method includes the following steps.

1301: A client sends a registration request to a third node based on object information of a to-be-registered object A, to obtain a feature of the object A, where the registration request carries number information of the client and the object information of the object A.

For this step, refer to step 301. Details are not described herein.

1302: In response to the registration request, the third node determines file information of a second target file in the third node, and sends the file information of the second target file to the client.

For this step, refer to step 302. Details are not described herein.

1303: When receiving the file information, of the second target file, that is sent by the third node, the client encodes the feature of the object A, to obtain a first feature vector FA of the object A, where FA is an M-dimensional vector, and M is a positive integer.

For this step, refer to step 304. Details are not described herein.

1304: The client obtains a second feature vector PA of the object A based on the first feature vector FA of the object A and the file information of the second target file, where PA is N×M-dimensional vectors, and M and N are positive integers.

For this step, refer to step 305. Details are not described herein.

1305: The client encrypts the second feature vector PA of the object A based on a public key of the third node, to obtain an encryption feature EPA of the object A.

For this step, refer to step 306. Details are not described herein.

1306: The client sends EPA and the number information of the client to the third node.

1307: The third node adds the received encryption feature EPA of the object A to the second target file based on the file information of the second target file and the number information of the client.

For this step, refer to step 309. Details are not described herein.

1308: When successfully adding the encryption feature of the object A, the third node adds the object information of the object A to a file information table, where the file information table includes object information of each registered feature in a file in the third node and location information of each registered feature in the file in the third node.

For this step, refer to step 311. Details are not described herein.

1309: The third node sends registration success information to the client.

According to the foregoing technical solution, the third node stores information encrypted based on the public key and public object information, and a fourth node stores a private key. This ensures separation of storage permission and decryption permission. When feature information of an object is not sent out from the client, a plurality of nodes interact with each other based on an information mapping relationship. This may implement efficient information processing and effectively ensure information security. Further, the fourth node is only used to provide a decryption service. A process of information exchange between the plurality of nodes is simplified, and information processing efficiency is effectively improved.

In the foregoing technical solution, in a process of performing information registration, registration encoding is used to ensure that registration is performed based on a vacant location in the second target file corresponding to the to-be-registered object, and the registration process does not affect another registered feature. This implements dynamic registration in an encrypted state, improves flexibility of information processing, and improves information processing efficiency on a basis of ensuring information security.

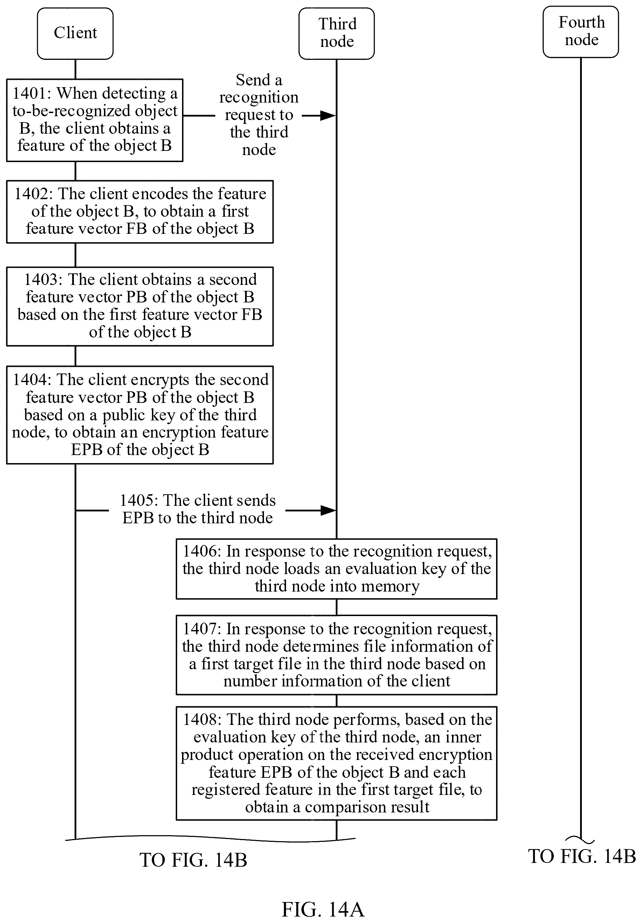

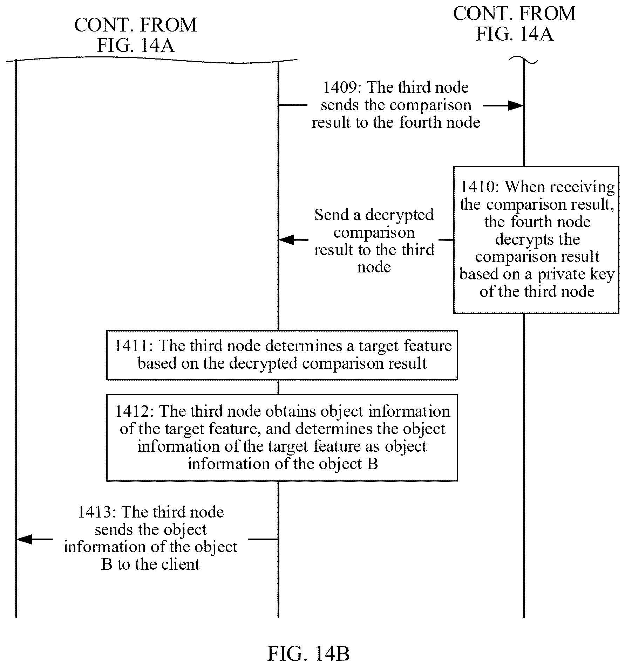

After the information registration process in the information processing method provided in embodiments of this application is described, the following describes an information recognition process in the information processing method provided in embodiments of this application. FIG. 14A and FIG. 14B are a schematic flowchart of an information processing method according to an embodiment of this application. As shown in FIG. 14A and FIG. 14B, the method includes the following steps.

1401: When detecting a to-be-recognized object B, a client sends a recognition request to a third node, to extract a feature of the object B, where the recognition request carries number information of the client.

For this step, refer to step 701. Details are not described herein.

1402: The client encodes the feature of the object B, to obtain a first feature vector FB of the object B, where FB is an M-dimensional vector, and M is a positive integer.

For this step, refer to step 702. Details are not described herein.

1403: The client obtains a second feature vector PB of the object B based on the first feature vector FB of the object B, where PB is N×M-dimensional vectors, and M and N are positive integers.

For this step, refer to step 703. Details are not described herein.

1404: The client encrypts the second feature vector PB of the object B based on a public key of the third node, to obtain an encryption feature EPB of the object B.

For this step, refer to step 704. Details are not described herein.

1405: The client sends EPB to the third node.

1406: In response to the recognition request, the third node loads an evaluation key of the third node into memory.

For this step, refer to step 708 and step 709. Details are not described herein.

1407: In response to the recognition request, the third node determines file information of a first target file in the third node based on the number information of the client.

For this step, refer to step 706. Details are not described herein.

It should be noted that, step 1406 and step 1407 may be simultaneously performed or may be sequentially performed. This is not limited in this embodiment of this application.

1408: The third node performs, based on the evaluation key of the third node, an inner product operation on the received encryption feature EPB of the object B and each registered feature in the first target file, to obtain a comparison result.

For a principle of this step, refer to step 711. Details are not described herein.

1409: The third node sends the comparison result to a fourth node.

1410: When receiving the comparison result, the fourth node decrypts the comparison result based on a private key of the third node, and sends a decrypted comparison result to the third node.

For a principle of this step, refer to step 713. Details are not described herein.

1411: The third node determines a target feature based on the decrypted comparison result, where the target feature is a registered feature with a maximum similarity to the feature of the object B.

For a principle of this step, refer to step 713. Details are not described herein.

1412: The third node obtains object information of the target feature from a file information table based on location information of the target feature in the first target file, and determines the object information of the target feature as object information of the object B, where the file information table includes object information of each registered feature in a file in the third node and location information of each registered feature in the file in the third node.

For a principle of this step, refer to step 714. Details are not described herein.

1413: The third node sends the object information of the object B to the client.

According to the foregoing technical solution, the third node stores information encrypted based on the public key and public object information, and the fourth node stores the private key. This ensures separation of storage permission and decryption permission. When feature information of an object is not sent out from the client, a plurality of nodes interact with each other based on an information mapping relationship. This may implement efficient information processing and effectively ensure information security. Further, the fourth node is only used to provide a decryption service. A process of information exchange between the plurality of nodes is simplified, and information processing efficiency is effectively improved.

In addition, according to the foregoing technical solution, one-to-many information recognition may be implemented based on a set of keys. This effectively resolves a problem that a large quantity of storage spaces are occupied to store a plurality of sets of keys corresponding to a plurality of registered features.

In the foregoing technical solution, in a process of performing information recognition, a feature of a to-be-recognized object is encoded as a multi-dimensional vector that matches a dimension of the first target file, so that the feature of the to-be-recognized object can be compared with a plurality of registered objects in parallel. This is equivalent to completing an information processing process for the plurality of registered objects in one processing periodicity, so that information processing efficiency is greatly improved.

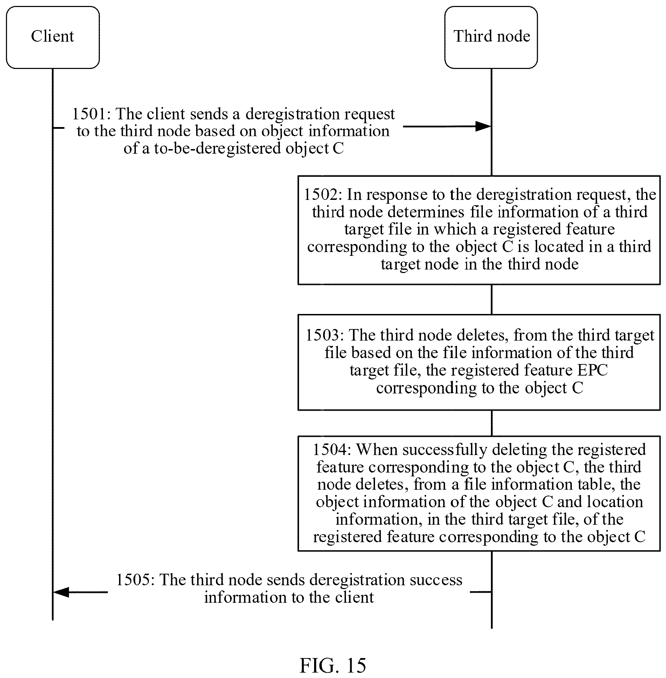

The following describes an information deregistration process in the information processing method provided in embodiments of this application. FIG. 15 is a schematic flowchart of an information processing method according to an embodiment of this application. As shown in FIG. 15, the method includes the following steps.

1501: A client sends a deregistration request to a third node based on object information of a to-be-deregistered object C, where the deregistration request carries number information of the client and the object information of the to-be-deregistered object C.

For this step, refer to step 1001. Details are not described herein.

1502: In response to the deregistration request, the third node determines file information of a third target file in which a registered feature corresponding to the object C is located in a third target node in the third node.

For this step, refer to step 1002. Details are not described herein.

1503: The third node deletes, from the third target file based on the file information of the third target file, the registered feature EPC corresponding to the object C.

For this step, refer to step 1005. Details are not described herein.

1504: When successfully deleting the registered feature corresponding to the object C, the third node deletes, from a file information table, the object information of the object C and location information, in the third target file, of the registered feature corresponding to the object C, where the file information table includes object information of each registered feature in a file in the third node and location information of each registered feature in the file in the third node.

For this step, refer to step 1007. Details are not described herein.

1505: The third node sends deregistration success information to the client.

According to the foregoing technical solution, the third node stores information encrypted based on a public key and public object information, and a fourth node stores a private key. This ensures separation of storage permission and decryption permission. When feature information of an object is not sent out from the client, a plurality of nodes interact with each other based on an information mapping relationship. This may implement efficient information processing and effectively ensure information security. Further, the fourth node is only used to provide a decryption service. A process of information exchange between the plurality of nodes is simplified, and information processing efficiency is effectively improved.

In the foregoing technical solution, in a process of performing information deregistration, based on an information mapping relationship stored in the file information table, it is ensured that deregistration is performed on the registered feature of the to-be-deregistered object, and the deregistration process does not affect another registered feature. This implements dynamic deregistration in an encrypted state, improves flexibility of information processing, and improves information processing efficiency on a basis of ensuring information security.

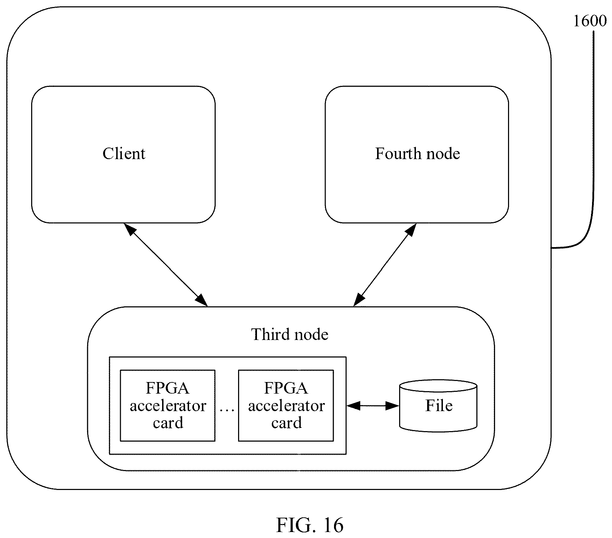

Optionally, to further improve parallel operation efficiency of the third node, configuration may be performed based on various aspects of the node. For example, based on a software aspect, OpenMP is used to implement parallel operation for data through multi-threading. For another example, based on a hardware aspect, an FPGA accelerator card is deployed in the information processing system, to improve a data parallel processing capability of the information processing system. An embodiment of this application provides a schematic diagram of an architecture of an information processing system. As shown in FIG. 16, an FPGA accelerator card is deployed in a third node of the information processing system 1600, to improve a parallelism degree of data computing performed by the third node. For an overall architecture of the information processing system 1600, refer to the information processing system 1200 corresponding to FIG. 12. Details are not described herein.

In this application, terms such as "first" and "second" are used to distinguish between same items or similar items that have basically same effects and functions. It should be understood that there is no logical or time sequence dependency between "first", "second", and "n^{th}", and a quantity and an execution sequence are not limited. It should also be understood that although terms such as "first" and "second" are used in the following descriptions to describe various elements, these elements should not be limited by the terms. These terms are merely used to distinguish one element from another element. For example, without departing from the scope of the various examples described, a first client may be referred to as a second client, and similarly, a second client may be referred to as a first client. Both the first client and the second client may be clients, and in some cases, may be separate and different clients.

In this application, the term "at least one" means one or more, and in this application, the term "a plurality of" means two or more. For example, a plurality of clients mean two or more clients.

The foregoing descriptions are merely specific implementations of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

All or some of the foregoing embodiments may be implemented by software, hardware, firmware, or any combination thereof. When software is used to implement the embodiments, all or some of the embodiments may be implemented in a form of a program product. The program product includes one or more program instructions. When the program instructions are loaded and executed on a computing device, all or some of the procedures or functions according to embodiments of this application are generated.

Persons of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In the foregoing descriptions, the foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An information processing system, wherein the information processing system comprises: a client (110), a first node (123), and a second node (130);
the client (110) is configured to: send, to the first node (123), a recognition request that carries number information of the client, and send an encryption feature of a to-be-recognized first object and the number information of the client to the second node, wherein the encryption feature of the first object is obtained based on a public key of the first node and a feature of the first object;
the first node (123) is configured to: determine a first target file in the second node in response to the recognition request, and send a recognition indication to the second node, wherein the recognition indication carries the number information of the client and file information of the first target file;
the second node (130) is configured to: in response to the recognition indication, compare the encryption feature of the first object based on the received encryption feature of the first object, the number information of the client, the file information of the first target file, and an evaluation key of the first node, to obtain a comparison result, and send the comparison result to the first node; and
the first node (120) is further configured to: when receiving the comparison result, decrypt the comparison result based on a private key of the first node, obtain object information of the first object based on a decrypted comparison result, and send the object information of the first object to the client.

2. The system according to claim 1, wherein
the client is further configured to: perform encoding based on the feature of the first object, to obtain a first feature vector of the first object, wherein the first feature vector is an M-dimensional vector;
obtain a second feature vector of the first object based on the first feature vector of the first object, wherein the second feature vector of the first object is N×M-dimensional vectors, and the second feature vector of the first object comprises N first feature vectors of the first object; and
encrypt the second feature vector of the first object based on the public key of the first node, to obtain the encryption feature of the first object, wherein
M and N are positive integers.

3. The system according to claim 1 or 2, wherein the second node comprises a scheduling node and a plurality of target nodes; and
the first node is configured to: determine, in a file information table based on the number information of the client in the recognition request, a first target node that corresponds to the client and that is in the second node, and determine, in the file information table, the file information of the first target file in the first target node, wherein the file information table comprises a correspondence between the number information of the client and the plurality of target nodes comprised in the second node, and a correspondence between the plurality of target nodes and files.

4. The system according to claim 3, wherein
the scheduling node in the second node is configured to: in response to the recognition indication, indicate the first target node to load the evaluation key of the first node into memory.

5. The system according to claim 3 or 4, wherein
the scheduling node in the second node is configured to: in response to the recognition indication, send the recognition indication and the encryption feature of the first object to the first target node in the second node based on the file information of the first target file when the number information received from the client is consistent with the number information of the client carried in the recognition indication.

6. The system according to claim 4 or 5, wherein
the first target node in the second node is configured to perform, in a ciphertext state based on the evaluation key of the first node, an inner product operation on the received encryption feature of the first object and each registered feature in the first target file, to obtain the comparison result.

7. The system according to any one of claims 1 to 6, wherein
the first node is configured to: determine a target feature based on the decrypted comparison result, wherein the target feature is a registered feature with a maximum similarity to the feature of the first object;
obtain object information of the target feature from the file information table based on location information of the target feature in the first target file, wherein the file information table comprises object information of each registered feature in a file in the second node and location information of each registered feature in the file in the second node; and
determine the object information of the target feature as the object information of the first object.

8. An information processing method, wherein the method is performed by a client in an information processing system, the information processing system further comprises a first node and a second node, and the method comprises:
sending (701), to the first node, a recognition request that carries number information of the client, wherein the recognition request is configured for triggering the first node to determine a first target file in the second node, and send (707) a recognition indication to the second node, wherein the recognition indication carries the number information of the client and file information of the first target file;
sending (705) an encryption feature of a to-be-recognized first object and the number information of the client to the second node, wherein the encryption feature of the first object is obtained based on a public key of the first node and a feature of the first object; and
receiving (715) object information of the first object from the first node, wherein the object information of the first object is obtained based on a decrypted comparison result obtained by decrypting a comparison result based on a private key of the first node, wherein the comparison result is sent by the second node and obtained by comparing the encryption feature of the first object based on the received encryption feature of the first object, the number information of the client, the file information of the first target file, and an evaluation key of the first node.

9. The method according to claim 8, wherein before the sending an encryption feature of a to-be-recognized first object and the number information of the client to the second node, the method further comprises:
performing encoding based on the feature of the first object, to obtain a first feature vector of the first object, wherein the first feature vector is an M-dimensional vector;
obtaining a second feature vector of the first object based on the first feature vector of the first object, wherein the second feature vector of the first object is N×M-dimensional vectors, and the second feature vector of the first object comprises N first feature vectors of the first object; and
encrypting the second feature vector of the first object based on the public key of the first node, to obtain the encryption feature of the first object, wherein
M and N are positive integers.

10. An information processing method, wherein the method is performed by a first node in an information processing system, the information processing system further comprises a client and a second node, and the method comprises:
determining (706) a first target file in the second node in response to a recognition request that is received from the client and that carries number information of the client, and sending (707) a recognition indication to the second node, wherein the recognition indication carries the number information of the client and file information of the first target file; and
when receiving a comparison result from the second node, decrypting (713) the comparison result based on a private key of the first node, obtaining object information of a first object based on a decrypted comparison result, and sending the object information of the first object to the client, wherein
the comparison result is obtained by performing, by the second node in response to the recognition indication, comparison on an encryption feature of the first object based on the encryption feature of the first object, the number information of the client, the file information of the first target file, and an evaluation key of the first node; and the encryption feature of the first object is obtained by the client based on a public key of the first node and a feature of the first object.

11. The method according to claim 10, wherein the second node comprises a scheduling node and a plurality of target nodes, and the determining a first target file in the second node in response to a recognition request that is received from the client and that carries number information of the client comprises:
determining, in a file information table based on the number information of the client in the recognition request, a first target node that corresponds to the client and that is in the second node, and determining, in the file information table, the file information of the first target file in the first target node, wherein the file information table comprises a correspondence between the number information of the client and the plurality of target nodes comprised in the second node, and a correspondence between the plurality of target nodes and files.

12. The method according to claim 10 or 11, wherein the obtaining object information of a first object based on a decrypted comparison result comprises:
determining, by the first node, a target feature based on the decrypted comparison result, wherein the target feature is a registered feature with a maximum similarity to the feature of the first object;
obtaining object information of the target feature from the file information table based on location information of the target feature in the first target file, wherein the file information table comprises object information of each registered feature in a file in the second node and location information of each registered feature in the file in the second node; and
determining the object information of the target feature as the object information of the first object.

13. An information processing method, wherein the method is performed by a second node in an information processing system, the information processing system further comprises a client and a first node, and the method comprises:
comparing (711), in response to a recognition indication received from the first node, an encryption feature of a first object based on the encryption feature, of the to-be-recognized first object, that is received from the client, number information of the client, file information of a first target file in the second node, and an evaluation key of the first node, to obtain a comparison result, and sending the comparison result to the first node, wherein the recognition indication carries the number information of the client and the file information of the first target file, the encryption feature of the first object is obtained based on a public key of the first node and a feature of the first object, and the comparison result is used to determine object information of the first object.

14. The method according to claim 13, wherein the method further comprises:
in response to the recognition indication, indicating, by a scheduling node in the second node, a first target node to load the evaluation key of the first node into memory.

15. A computing device, wherein the computing device comprises a processor and a memory, the memory is configured to store at least one segment of program code, and the at least one segment of program code is loaded by the processor and is used to perform the information processing method according to claim 8 or 9, or the information processing method according to any one of claims 10 to 12, or the information processing method according to claims 13 or 14.

## Patentansprüche

1. Informationsverarbeitungssystem, wobei das Informationsverarbeitungssystem umfasst: einen Client (110), einen ersten Knoten (123) und einen zweiten Knoten (130);
wobei der Client (110) ausgelegt ist zum: Senden, an den ersten Knoten (123), einer Erkennungsanforderung, die Zahleninformationen des Clients enthält, und Senden eines Verschlüsselungsmerkmals eines zu erkennenden ersten Objekts und der Zahleninformationen des Clients an den zweiten Knoten, wobei das Verschlüsselungsmerkmal des ersten Objekts basierend auf einem öffentlichen Schlüssel des ersten Knotens und einem Merkmal des ersten Objekts erhalten wird;
wobei der erste Knoten (123) ausgelegt ist zum: Bestimmen einer ersten Zieldatei im zweiten Knoten als Reaktion auf die Erkennungsanforderung und Senden einer Erkennungsangabe an den zweiten Knoten, wobei die Erkennungsangabe die Zahleninformationen des Clients und Dateiinformationen der ersten Zieldatei enthält;
wobei der zweite Knoten (130) ausgelegt ist zum: als Reaktion auf die Erkennungsangabe, Vergleichen des Verschlüsselungsmerkmals des ersten Objekts basierend auf dem empfangenen Verschlüsselungsmerkmal des ersten Objekts, den Zahleninformationen des Clients, den Dateiinformationen der ersten Zieldatei und einem Auswertungsschlüssel des ersten Knotens zum Erhalten eines Vergleichsergebnisses und Senden des Vergleichsergebnisses an den ersten Knoten; und
wobei der erste Knoten (120) ferner ausgelegt ist zum: beim Empfangen des Vergleichsergebnisses, Entschlüsseln des Vergleichsergebnisses basierend auf einem privaten Schlüssel des ersten Knotens, Erhalten von Objektinformationen des ersten Objekts basierend auf einem entschlüsselten Vergleichsergebnis und Senden der Objektinformationen des ersten Objekts an den Client.

2. System nach Anspruch 1, wobei
der Client ferner ausgelegt ist zum: Durchführen eines Codierens basierend auf dem Merkmal des ersten Objekts zum Erhalten eines ersten Merkmalsvektors des ersten Objekts, wobei der erste Merkmalsvektor ein M-dimensionaler Vektor ist;
Erhalten eines zweiten Merkmalsvektors des ersten Objekts basierend auf dem ersten Merkmalsvektor des ersten Objekts, wobei der zweite Merkmalsvektor des ersten Objekts N×M-dimensionale Vektoren ist und der zweite Merkmalsvektor des ersten Objekts N erste Merkmalsvektoren des ersten Objekts umfasst; und
Verschlüsseln des zweiten Merkmalsvektors des ersten Objekts basierend auf dem öffentlichen Schlüssel des ersten Knotens zum Erhalten des Verschlüsselungsmerkmals des ersten Objekts, wobei
M und N positive Ganzzahlen sind.

3. System nach Anspruch 1 oder 2, wobei der zweite Knoten einen Planungsknoten und eine Vielzahl von Zielknoten umfasst; und
wobei der erste Knoten ausgelegt ist zum: Bestimmen, in einer Dateiinformationentabelle basierend auf den Zahleninformationen des Clients in der Erkennungsanforderung, eines ersten Zielknotens, der dem Client entspricht und der im zweiten Knoten ist, und Bestimmen, in der Dateiinformationentabelle, der Dateiinformationen der ersten Zieldatei im ersten Zielknoten, wobei die Dateiinformationentabelle eine Entsprechung zwischen den Zahleninformationen des Clients und der Vielzahl von Zielknoten, die im zweiten Knoten enthalten sind, und eine Entsprechung zwischen der Vielzahl von Zielknoten und Dateien umfasst.

4. System nach Anspruch 3, wobei
der Planungsknoten im zweiten Knoten ausgelegt ist zum: als Reaktion auf die Erkennungsangabe, Angeben des ersten Zielknotens zum Laden des Auswertungsschlüssels des ersten Knotens in Speicher.

5. System nach Anspruch 3 oder 4, wobei
der Planungsknoten im zweiten Knoten ausgelegt ist zum: als Reaktion auf die Erkennungsangabe, Senden der Erkennungsangabe und des Verschlüsselungsmerkmals des ersten Objekts an den ersten Zielknoten im zweiten Knoten basierend auf den Dateiinformationen der ersten Zieldatei, wenn die vom Client empfangenen Zahleninformationen im Einklang mit den in der Erkennungsangabe enthaltenen Zahleninformationen des Clients sind.

6. System nach Anspruch 4 oder 5, wobei
der erste Zielknoten im zweiten Knoten ausgelegt ist zum Durchführen, in einem Geheimtextzustand basierend auf dem Auswertungsschlüssel des ersten Knotens, einer Skalarproduktoperation am empfangenen Verschlüsselungsmerkmal des ersten Objekts und an jedem registrierten Merkmal in der ersten Zieldatei zum Erhalten des Vergleichsergebnisses.

7. System nach einem der Ansprüche 1 bis 6, wobei
der erste Knoten ausgelegt ist zum: Bestimmen eines Zielmerkmals basierend auf dem entschlüsselten Vergleichsergebnis, wobei das Zielmerkmal ein registriertes Merkmal mit einer maximalen Ähnlichkeit zum Merkmal des ersten Objekts ist;
Erhalten von Objektinformationen des Zielmerkmals aus der Dateiinformationentabelle basierend auf Ortsinformationen des Zielmerkmals in der ersten Zieldatei, wobei die Dateiinformationentabelle Objektinformationen jedes registrierten Merkmals in einer Datei im zweiten Knoten und Ortsinformationen jedes registrierten Merkmals in der Datei im zweiten Knoten umfasst; und
Bestimmen der Objektinformationen des Zielmerkmals als die Objektinformationen des ersten Objekts.

8. Informationsverarbeitungsverfahren, wobei das Verfahren durch einen Client in einem Informationsverarbeitungssystem durchgeführt wird, das Informationsverarbeitungssystem ferner einen ersten Knoten und einen zweiten Knoten umfasst und das Verfahren umfasst:
Senden (701), an den ersten Knoten, einer Erkennungsanforderung, die Zahleninformationen des Clients enthält, wobei die Erkennungsanforderung ausgelegt ist zum Auslösen des ersten Knotens zum Bestimmen einer ersten Zieldatei im zweiten Knoten und Senden (707) einer Erkennungsangabe an den zweiten Knoten, wobei die Erkennungsangabe die Zahleninformationen des Clients und Dateiinformationen der ersten Zieldatei enthält;
Senden (705) eines Verschlüsselungsmerkmals eines zu erkennenden ersten Objekts und der Zahleninformationen des Clients an den zweiten Knoten, wobei das Verschlüsselungsmerkmal des ersten Objekts basierend auf einem öffentlichen Schlüssel des ersten Knotens und einem Merkmal des ersten Objekts erhalten wird; und
Empfangen (715) von Objektinformationen des ersten Objekts vom ersten Knoten, wobei die Objektinformationen des ersten Objekts basierend auf einem entschlüsselten Vergleichsergebnis erhalten werden, das durch Entschlüsseln eines Vergleichsergebnisses basierend auf einem privaten Schlüssel des ersten Knotens erhalten wird, wobei das Vergleichsergebnis durch den zweiten Knoten gesendet und durch Vergleichen des Verschlüsselungsmerkmals des ersten Objekts basierend auf dem empfangenen Verschlüsselungsmerkmal des ersten Objekts, den Zahleninformationen des Clients, den Dateiinformationen der ersten Zieldatei und einem Auswertungsschlüssel des ersten Knotens erhalten wird.

9. Verfahren nach Anspruch 8, wobei, vor dem Senden eines Verschlüsselungsmerkmals eines zu erkennenden ersten Objekts und der Zahleninformationen des Clients an den zweiten Knoten, das Verfahren ferner umfasst:
Durchführen eines Codierens basierend auf dem Merkmal des ersten Objekts zum Erhalten eines ersten Merkmalsvektors des ersten Objekts, wobei der erste Merkmalsvektor ein M-dimensionaler Vektor ist;
Erhalten eines zweiten Merkmalsvektors des ersten Objekts basierend auf dem ersten Merkmalsvektor des ersten Objekts, wobei der zweite Merkmalsvektor des ersten Objekts N×M-dimensionale Vektoren ist und der zweite Merkmalsvektor des ersten Objekts N erste Merkmalsvektoren des ersten Objekts umfasst; und
Verschlüsseln des zweiten Merkmalsvektors des ersten Objekts basierend auf dem öffentlichen Schlüssel des ersten Knotens zum Erhalten des Verschlüsselungsmerkmals des ersten Objekts, wobei
M und N positive Ganzzahlen sind.

10. Informationsverarbeitungsverfahren, wobei das Verfahren durch einen ersten Knoten in einem Informationsverarbeitungssystem durchgeführt wird, das Informationsverarbeitungssystem ferner einen Client und einen zweiten Knoten umfasst und das Verfahren umfasst:
Bestimmen (706) einer ersten Zieldatei im zweiten Knoten als Reaktion auf eine Erkennungsanforderung, die vom Client empfangen wird und die Zahleninformationen des Clients enthält, und Senden (707) einer Erkennungsangabe an den zweiten Knoten, wobei die Erkennungsangabe die Zahleninformationen des Clients und Dateiinformationen der ersten Zieldatei enthält; und
beim Empfangen eines Vergleichsergebnisses vom zweiten Knoten, Entschlüsseln (713) des Vergleichsergebnisses basierend auf einem privaten Schlüssel des ersten Knotens, Erhalten von Objektinformationen eines ersten Objekts basierend auf einem entschlüsselten Vergleichsergebnis und Senden der Objektinformationen des ersten Objekts an den Client, wobei
das Vergleichsergebnis durch Durchführen, durch den zweiten Knoten als Reaktion auf die Erkennungsangabe, eines Vergleichs an einem Verschlüsselungsmerkmal des ersten Objekts basierend auf dem Verschlüsselungsmerkmal des ersten Objekts, den Zahleninformationen des Clients, den Dateiinformationen der ersten Zieldatei und einem Auswertungsschlüssel des ersten Knotens erhalten wird und das Verschlüsselungsmerkmal des ersten Objekts durch den Client basierend auf einem öffentlichen Schlüssel des ersten Knotens und einem Merkmal des ersten Objekts erhalten wird.

11. Verfahren nach Anspruch 10, wobei der zweite Knoten einen Planungsknoten und eine Vielzahl von Zielknoten umfasst und das Bestimmen einer ersten Zieldatei im zweiten Knoten als Reaktion auf eine Erkennungsanforderung, die vom Client empfangen wird und die Zahleninformationen des Clients enthält, umfasst:
Bestimmen, in einer Dateiinformationentabelle basierend auf den Zahleninformationen des Clients in der Erkennungsanforderung, eines ersten Zielknotens, der dem Client entspricht und der im zweiten Knoten ist, und Bestimmen, in der Dateiinformationentabelle, der Dateiinformationen der ersten Zieldatei im ersten Zielknoten, wobei die Dateiinformationentabelle eine Entsprechung zwischen den Zahleninformationen des Clients und der Vielzahl von Zielknoten, die im zweiten Knoten enthalten sind, und eine Entsprechung zwischen der Vielzahl von Zielknoten und Dateien umfasst.

12. Verfahren nach Anspruch 10 oder 11, wobei das Erhalten von Objektinformationen eines ersten Objekts basierend auf einem entschlüsselten Vergleichsergebnis umfasst:
Bestimmen, durch den ersten Knoten, eines Zielmerkmals basierend auf dem entschlüsselten Vergleichsergebnis, wobei das Zielmerkmal ein registriertes Merkmal mit einer maximalen Ähnlichkeit zum Merkmal des ersten Objekts ist;
Erhalten von Objektinformationen des Zielmerkmals aus der Dateiinformationentabelle basierend auf Ortsinformationen des Zielmerkmals in der ersten Zieldatei, wobei die Dateiinformationentabelle Objektinformationen jedes registrierten Merkmals in einer Datei im zweiten Knoten und Ortsinformationen jedes registrierten Merkmals in der Datei im zweiten Knoten umfasst; und
Bestimmen der Objektinformationen des Zielmerkmals als die Objektinformationen des ersten Objekts.

13. Informationsverarbeitungsverfahren, wobei das Verfahren durch einen zweiten Knoten in einem Informationsverarbeitungssystem durchgeführt wird, das Informationsverarbeitungssystem ferner einen Client und einen ersten Knoten umfasst und das Verfahren umfasst:
Vergleichen (711), als Reaktion auf eine vom ersten Knoten empfangene Erkennungsangabe, eines Verschlüsselungsmerkmals eines ersten Objekts basierend auf dem Verschlüsselungsmerkmal des zu erkennenden ersten Objekts, das vom Client empfangen wird, Zahleninformationen des Clients, Dateiinformationen einer ersten Zieldatei im zweiten Knoten und einem Auswertungsschlüssel des ersten Knotens zum Erhalten eines Vergleichsergebnisses und Senden des Vergleichsergebnisses an den ersten Knoten, wobei die Erkennungsangabe die Zahleninformationen des Clients und die Dateiinformationen der ersten Zieldatei enthält, das Verschlüsselungsmerkmal des ersten Objekts basierend auf einem öffentlichen Schlüssel des ersten Knotens und einem Merkmal des ersten Objekts erhalten wird und das Vergleichsergebnis zum Bestimmen von Objektinformationen des ersten Objekts verwendet wird.

14. Verfahren nach Anspruch 13, wobei das Verfahren ferner umfasst:
als Reaktion auf die Erkennungsangabe, Angeben, durch einen Planungsknoten im zweiten Knoten, eines ersten Zielknotens zum Laden des Auswertungsschlüssels des ersten Knotens in Speicher.

15. Rechengerät, wobei das Rechengerät einen Prozessor und einen Speicher umfasst, der Speicher ausgelegt ist zum Speichern zumindest eines Segments von Programmcode und das zumindest eine Segment von Programmcode durch den Prozessor geladen wird und zum Durchführen des Informationsverarbeitungsverfahrens nach Anspruch 8 oder 9 oder des Informationsverarbeitungsverfahrens nach einem der Ansprüche 10 bis 12 oder des Informationsverarbeitungsverfahrens nach Ansprüchen 13 oder 14 verwendet wird.

## Revendications

1. Système de traitement d'informations, le système de traitement d'informations comprenant :
un client (110), un premier nœud (123) et un second nœud (130) ;
le client (110) est configuré pour : envoyer, au premier nœud (123), une demande de reconnaissance qui transporte des informations de numéro du client, et envoyer une caractéristique de chiffrement d'un premier objet à reconnaître et les informations de numéro du client au second nœud, dans lequel la caractéristique de chiffrement du premier objet est obtenue sur la base d'une clé publique du premier nœud et d'une caractéristique du premier objet ;
le premier nœud (123) est configuré pour : déterminer un premier fichier cible dans le second nœud en réponse à la demande de reconnaissance, et envoyer une indication de reconnaissance au second nœud, dans lequel l'indication de reconnaissance transporte les informations de numéro du client et des informations de fichier du premier fichier cible ;
le second nœud (130) est configuré pour : en réponse à l'indication de reconnaissance, comparer la caractéristique de chiffrement du premier objet sur la base de la caractéristique de chiffrement reçue du premier objet, des informations de numéro du client, des informations de fichier du premier fichier cible, et d'une clé d'évaluation du premier nœud, pour obtenir un résultat de comparaison, et envoyer le résultat de comparaison au premier nœud ; et
le premier nœud (120) est en outre configuré pour : lors de la réception du résultat de comparaison, déchiffrer le résultat de comparaison sur la base d'une clé privée du premier nœud, obtenir des informations d'objet du premier objet sur la base d'un résultat de comparaison déchiffré, et envoyer les informations d'objet du premier objet au client.

2. Système selon la revendication 1, dans lequel
le client est en outre configuré pour : exécuter un codage sur la base de la caractéristique du premier objet, pour obtenir un premier vecteur de caractéristique du premier objet, dans lequel le premier vecteur de caractéristique est un vecteur à M dimensions ;
obtenir un second vecteur de caractéristique du premier objet sur la base du premier vecteur de caractéristique du premier objet, dans lequel le second vecteur de caractéristique du premier objet est un vecteur à N x M dimensions, et le second vecteur de caractéristique du premier objet comprend N premiers vecteurs de caractéristique du premier objet ; et
chiffrer le second vecteur de caractéristique du premier objet sur la base de la clé publique du premier nœud, pour obtenir la caractéristique de chiffrement du premier objet, dans lequel
M et N sont des entiers positifs.

3. Système selon la revendication 1 ou 2, dans lequel le second nœud comprend un nœud de planification et une pluralité de nœuds cibles ; et
le premier nœud est configuré pour : déterminer, dans une table d'informations de fichier sur la base des informations de numéro du client dans la demande de reconnaissance, un premier nœud cible qui correspond au client et qui se trouve dans le second nœud, et déterminer, dans la table d'informations de fichier, les informations de fichier du premier fichier cible dans le premier nœud cible, dans lequel la table d'informations de fichier comprend une correspondance entre les informations de numéro du client et la pluralité de nœuds cibles compris dans le second nœud, et une correspondance entre la pluralité de nœuds et de fichiers cibles.

4. Système selon la revendication 3, dans lequel
le nœud de planification dans le second nœud est configuré pour : en réponse à l'indication de reconnaissance, indiquer au premier nœud cible de charger la clé d'évaluation du premier nœud dans une mémoire.

5. Système selon la revendication 3 ou 4, dans lequel
le nœud de planification dans le second nœud est configuré pour : en réponse à l'indication de reconnaissance, envoyer l'indication de reconnaissance et la caractéristique de chiffrement du premier objet au premier nœud cible dans le second nœud sur la base des informations de fichier du premier fichier cible lorsque les informations de numéro envoyées par le client sont cohérentes avec les informations de numéro du client transportées dans l'indication de reconnaissance.

6. Système selon la revendication 4 ou 5, dans lequel
le premier nœud cible dans le second nœud est configuré pour exécuter, dans un état de cryptogramme sur la base de la clé d'évaluation du premier nœud, une opération de produit interne sur la caractéristique de chiffrement reçue du premier objet et chaque caractéristique enregistrée dans le premier fichier cible, pour obtenir le résultat de comparaison.

7. Système selon l'une quelconque des revendications 1 à 6, dans lequel
le premier nœud est configuré pour : déterminer une caractéristique cible sur la base du résultat de comparaison déchiffré, dans lequel la caractéristique cible est une caractéristique enregistrée présentant une similarité maximale avec la caractéristique du premier objet ;
obtenir des informations d'objet de la caractéristique cible à partir de la table d'informations de fichier sur la base d'informations d'emplacement de la caractéristique cible dans le premier fichier cible, dans lequel la table d'informations de fichier comprend des informations d'objet de chaque caractéristique enregistrée dans un fichier dans le second nœud et des informations d'emplacement de chaque caractéristique enregistrée dans le fichier dans le second nœud ; et
déterminer les informations d'objet de la caractéristique cible en tant qu'informations d'objet du premier objet.

8. Procédé de traitement d'informations, le procédé étant exécuté par un client dans un système de traitement d'informations, le système de traitement d'informations comprenant en outre un premier nœud et un second nœud, et le procédé comprenant :
l'envoi (701), au premier nœud, d'une demande de reconnaissance qui transporte des informations de numéro du client, dans lequel la demande de reconnaissance est configurée pour déclencher le premier nœud pour déterminer un premier fichier cible dans le second nœud, et envoyer (707) une indication de reconnaissance au second nœud, dans lequel l'indication de reconnaissance transporte les informations de numéro du client et des informations de fichier du premier fichier cible ;
l'envoi (705) d'une caractéristique de chiffrement d'un premier objet à reconnaître et des informations de numéro du client au second nœud, dans lequel la caractéristique de chiffrement du premier objet est obtenue sur la base d'une clé publique du premier nœud et d'une caractéristique du premier objet ; et
la réception (715) d'informations d'objet du premier objet depuis le premier nœud, dans lequel les informations d'objet du premier objet sont obtenues sur la base d'un résultat de comparaison déchiffré obtenu par déchiffrement d'un résultat de comparaison sur la base d'une clé privée du premier nœud, dans lequel le résultat de comparaison est envoyé par le second nœud et obtenu par comparaison de la caractéristique de chiffrement du premier objet sur la base de la caractéristique de chiffrement reçue du premier objet, des informations de numéro du client, des informations de fichier du premier fichier cible, et d'une clé d'évaluation du premier nœud.

9. Procédé selon la revendication 8, avant l'envoi d'une caractéristique de chiffrement d'un premier objet à reconnaître et des informations de numéro du client au second nœud, le procédé comprenant en outre :
l'exécution d'un codage sur la base de la caractéristique du premier objet, pour obtenir un premier vecteur de caractéristique du premier objet, dans lequel le premier vecteur de caractéristique est un vecteur à M dimensions ;
l'obtention d'un second vecteur de caractéristique du premier objet sur la base du premier vecteur de caractéristique du premier objet, dans lequel le second vecteur de caractéristique du premier objet est un vecteur à N x M dimensions, et le second vecteur de caractéristique du premier objet comprend N premiers vecteurs de caractéristique du premier objet ; et
le chiffrement du second vecteur de caractéristique du premier objet sur la base de la clé publique du premier nœud, pour obtenir la caractéristique de chiffrement du premier objet, dans lequel
M et N sont des entiers positifs.

10. Procédé de traitement d'informations, le procédé étant exécuté par un premier nœud dans un système de traitement d'informations, le système de traitement d'informations comprenant en outre un client et un second nœud, et le procédé comprenant :
la détermination (706) d'un premier fichier cible dans le second nœud en réponse à une demande de reconnaissance envoyée par le client et qui transporte des informations de numéro du client, et l'envoi (707) d'une indication de reconnaissance au second nœud, dans lequel l'indication de reconnaissance transporte les informations de numéro du client et des informations de fichier du premier fichier cible ; et
lors de la réception d'un résultat de comparaison depuis le second nœud, le déchiffrement (713) du résultat de comparaison sur la base d'une clé privée du premier nœud, l'obtention d'informations d'objet d'un premier objet sur la base d'un résultat de comparaison déchiffré, et l'envoi des informations d'objet du premier objet au client, dans lequel
le résultat de comparaison est obtenu par l'exécution, par le second nœud en réponse à l'indication de reconnaissance, d'une comparaison sur une caractéristique de chiffrement du premier objet sur la base de la caractéristique de chiffrement du premier objet, des informations de numéro du client, des informations de fichier du premier fichier cible et d'une clé d'évaluation du premier nœud ; et la caractéristique de chiffrement du premier objet est obtenue par le client sur la base d'une clé publique du premier nœud et d'une caractéristique du premier objet.

11. Procédé selon la revendication 10, dans lequel le second nœud comprend un nœud de planification et une pluralité de nœuds cibles, et la détermination d'un premier fichier cible dans le second nœud en réponse à une demande de reconnaissance qui est envoyée par le client et qui transporte des informations de numéro du client comprend :
la détermination, dans une table d'informations de fichier sur la base des informations de numéro du client dans la demande de reconnaissance, d'un premier nœud cible qui correspond au client et qui se trouve dans le second nœud, et la détermination, dans la table d'informations de fichier, des informations de fichier du premier fichier cible dans le premier nœud cible, dans lequel la table d'informations de fichier comprend une correspondance entre les informations de numéro du client et la pluralité de nœuds cibles compris dans le second nœud, et une correspondance entre la pluralité de nœuds et de fichiers cibles.

12. Procédé selon la revendication 10 ou 11, dans lequel l'obtention d'informations d'objet d'un premier objet sur la base d'un résultat de comparaison déchiffré comprend :
la détermination, par le premier nœud, d'une caractéristique cible sur la base du résultat de comparaison déchiffré, dans lequel la caractéristique cible est une caractéristique enregistrée présentant une similarité maximale avec la caractéristique du premier objet ;
l'obtention d'informations d'objet de la caractéristique cible à partir de la table d'informations de fichier sur la base d'informations d'emplacement de la caractéristique cible dans le premier fichier cible, dans lequel la table d'informations de fichier comprend des informations d'objet de chaque caractéristique enregistrée dans un fichier dans le second nœud et des informations d'emplacement de chaque caractéristique enregistrée dans le fichier dans le second nœud ; et
la détermination des informations d'objet de la caractéristique cible en tant qu'informations d'objet du premier objet.

13. Procédé de traitement d'informations, le procédé étant exécuté par un second nœud dans un système de traitement d'informations, le système de traitement d'informations comprenant en outre un client et un premier nœud, et le procédé comprenant :
la comparaison (711), en réponse à une indication de reconnaissance envoyée par le premier nœud, d'une caractéristique de chiffrement d'un premier objet sur la base de la caractéristique de chiffrement, du premier objet à reconnaître, qui est envoyée par le client, d'informations de numéro du client, d'informations de fichier d'un premier fichier cible dans le second nœud, et d'une clé d'évaluation du premier nœud, pour obtenir un résultat de comparaison, et l'envoi du résultat de comparaison au premier nœud, dans lequel l'indication de reconnaissance transporte les informations de numéro du client et les informations de fichier du premier fichier cible, la caractéristique de chiffrement du premier objet est obtenue sur la base d'une clé publique du premier nœud et d'une caractéristique du premier objet, et le résultat de comparaison est utilisé pour déterminer des informations d'objet du premier objet.

14. Procédé selon la revendication 13, dans lequel le procédé comprend en outre :
en réponse à l'indication de reconnaissance, l'indication, par un nœud de planification dans le second nœud, à un premier nœud cible de charger la clé d'évaluation du premier nœud dans une mémoire.

15. Dispositif informatique, le dispositif informatique comprenant un processeur et une mémoire, la mémoire étant configurée pour stocker au moins un segment de code de programme, et le ou les segments de code de programme étant chargés par le processeur et étant utilisés pour exécuter le procédé de traitement d'informations selon les revendications 8 ou 9, ou le procédé de traitement d'informations selon l'une quelconque des revendications 10 à 12, ou le procédé de traitement d'informations selon les revendications 13 ou 14.
